# EUROPÄISCHE PATENTSCHRIFT

(11) **EP 4 106 287 B1**
(45) Veröffentlichungstag und Bekanntmachung des Hinweises auf die Patenterteilung: **17.04.2024**
(21) Anmeldenummer: 21179492.0
(22) Anmeldetag: 15.06.2021
(51) Int. Cl.: H04L 9/40, G06F 21/60, G06F 21/62, G06F 3/12

(54) **VERFAHREN ZUM BETREIBEN EINES DRUCKSYSTEMS**
METHOD FOR OPERATING A PRINT SYSTEM
PROCÉDÉ DE FONCTIONNEMENT D'UN SYSTÈME D'IMPRESSION

(43) Veröffentlichungstag der Anmeldung: 21.12.2022
(73) Patentinhaber: Genius Bytes Software Solutions GmbH, 44801 Bochum (DE)
(72) Erfinder: Horst, Matthias, 44801 Bochum (DE)
(74) Vertreter: Cohausz & Florack

(56) Entgegenhaltungen:
- WO-A1-2018/115667
- WO-A1-2020/086088
- WO-A1-2021/054967
- US-A1- 2003 081 788
- US-A1- 2006 136 726

## Beschreibung

Die Anmeldung betrifft ein Verfahren zum (sicheren) Betreiben eines Drucksystems. Darüber hinaus betrifft die Anmeldung einen Druckserver, eine Druckvorrichtung, ein Drucksystem und eine Druckanwendung.

Aus dem Stand der Technik sind Verfahren zum Betreiben von Drucksystemen und Drucksysteme mit mindestens einer Druckvorrichtung bekannt, die von mindestens einer Computervorrichtung zum Drucken eines Druckauftrags genutzt werden kann.

So kann ein Druckauftrag durch die Computervorrichtung generiert werden. Der generierte Druckauftrag kann über ein drahtloses und/oder drahtgebundenes Kommunikationsnetz an die mindestens eine Druckvorrichtung übertragen werden. Nach Erhalt des Druckauftrags führt die Druckvorrichtung den Druckauftrag aus, druckt also beispielsweise ein Dokument oder dergleichen aus.

In der Regel umfasst ein Drucksystem mindestens eine Druckvorrichtung, mindestens einen Druckserver und eine Vielzahl von Computervorrichtungen. Die genannten Elemente sind über ein drahtloses und/oder drahtgebundenes Kommunikationsnetz miteinander verbindbar.

Ein grundsätzliches Problem solcher Drucksysteme besteht darin, dass von einer Druckvorrichtung ausgedruckte Dokumente auch von Nutzern lesbar sein können, die hierzu keine Berechtigung haben. So ist eine (Netzwerk-) Druckvorrichtung in der Regel von einer Vielzahl von Computervorrichtungen und/oder Nutzern nutzbar und insbesondere von den Computervorrichtungen entfernt angeordnet. Wird nun ein Druckauftrag (auch Druckjob genannt) durch eine Computervorrichtung, der von einem ersten berechtigten Nutzer bedient wird, erzeugt und zum Drucken an eine Druckvorrichtung via dem Druckserver übertragen, kann dieser unmittelbar durch die Druckvorrichtung ausgedruckt werden. Beispielsweise aufgrund der Distanz zwischen der Computervorrichtung, die den Druckauftrag generiert hat, und der Druckvorrichtung (aber auch aus anderen Gründen) ist der ausgedruckte Druckauftrag von nicht berechtigten Dritten häufig einsehbar.

Um die Sicherheit bei derartigen Drucksystemen zu erhöhen und insbesondere zu verhindern, dass unberechtigte Dritte Zugriff auf durch eine (Netzwerk-) Druckvorrichtung ausgedruckte Dokumente haben können, werden beim Stand der Technik nutzerbezogene Signaturkarten (auch Smartkarten genannt) verwendet. Insbesondere kann jedem Nutzer eine Signaturkarte mit einem geheimen Schlüssel zugeordnet sein.

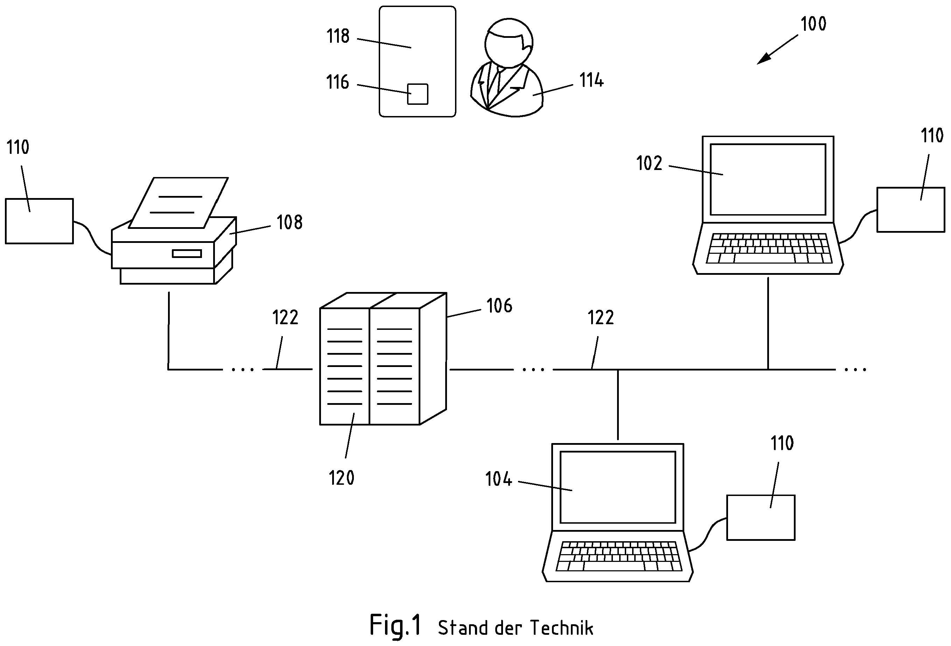

Ein derartiges Drucksystem 100 gemäß dem Stand der Technik ist in der Figur 1 dargestellt. Das Drucksystem 100 umfasst eine Mehrzahl von Computervorrichtungen 102, 104, die jeweils ein Kartenlesegerät 110 umfassen bzw. mit einem solchen Kartenlesegerät 110 verbunden sind.

Ein Nutzer kann beispielsweise in herkömmlicher Weise mit einer Computervorrichtung 102, 104 ein zu druckendes Dokument erstellen. Für ein Ausdrucken durch die Druckvorrichtung 108 des Drucksystems wird der Druckauftrag, enthaltend das zu druckende Dokument, mit dem geheimen Schlüssel (auch privater Schlüssel genannt) des Nutzers 114 verschlüsselt. Dieser Schlüssel ist in einem Speichermittel 116 der Signaturkarte 118 des Nutzers gespeichert und kann von dem Kartenlesegerät 110 einer Computervorrichtung 102, 104 zum Verschlüsseln verwendet werden.

Der mit dem Schlüssel verschlüsselte Druckauftrag wird dann über ein drahtloses und/oder drahtgebundenes Kommunikationsnetz 122 an den Druckserver 106 des Drucksystems 100 gesendet und in einem Datenspeicher 120 des Druckservers 106 abgespeichert.

Um das Dokument in sicherer Weise auszudrucken, umfasst die Druckvorrichtung 108 ein weiteres Kartenlesegerät 110. Der verschlüsselte Druckauftrag kann von dem Druckserver 106 an die Druckvorrichtung 108 übertragen werden. Der Nutzer hält seine Signaturkarte in das Kartenlesegerät. Der verschlüsselte Druckauftrag wird dann mit dem an der Druckvorrichtung 108 durch das Kartenlesegerät 110 ausgelesenen geheimen Schlüssel des Nutzers entschlüsselt. Das entschlüsselte Dokument wird dann durch die Druckvorrichtung 108 ausgelesen. Hierdurch wird sichergestellt, dass der berechtigte Nutzer bei der Durchführung des Druckvorgangs physisch an der Druckvorrichtung 108 anwesend ist.

Ein solches Drucksystem hat die Nachteile, dass zusätzliche Hardware erforderlich ist. Neben der Vielzahl von Kartenlesegeräten muss jeder Nutzer über eine Signaturkarte verfügen.

Zudem ist der Betrieb eines solchen Systems mit einem hohen Aufwand verbunden, da beispielsweise die Zertifikate der Signaturkarten regelmäßig aktualisiert werden müssen. Es müssen Sperrlisten gepflegt werden, um zu verhindern, dass gesperrte Signaturkarten (die beispielsweise von einem Nutzer verloren worden sind) weiterhin einsetzbar sind.

Ferner wird die Sicherheit zwar verbessert. Jedoch ist das Sicherheitslevel des Drucksystems vergleichsweise gering, da der verwendete geheime Schlüssel lediglich personenbezogen bzw. nutzerbezogen ist. Wenn der Schlüssel einem unberechtigten Dritten bekannt wird, kann dieser ausgedruckte Druckaufträge unberechtigt einsehen.

Die Druckschrift US 2006/0136726 A1 offenbart ein Verfahren zum sicheren Drucken eines Dokuments an einem Netzwerkdrucker, wobei der Verfahrensablauf wie folgt ist:
1. Ein Computer erzeugt einen Druckauftrag und verschlüsselt diesen mit einem symmetrischen Schlüssel.
2. Der Computer verschlüsselt den symmetrischen Schlüssel mit einem öffentlichen Schlüssel des Geräts.
3. Verschlüsselter Druckauftrag und verschlüsselter symmetrischer Schlüssel werden an Drucker versendet.
4. Der Drucker versendet, nachdem er das Mobilgerät gefunden hat, den verschlüsselten symmetrischen Schlüssel an das Gerät.
5. Das Gerät entschlüsselt den symmetrischen Schlüssel mit seinem privaten Schlüssel und verschlüsselt den symmetrischen Schlüssel dann mit dem öffentlichen Schlüssel des Druckers.
6. Das Gerät überträgt den verschlüsselten symmetrischen Schlüssel an den Drucker.
7. Dann entschlüsselt der Drucker erst den symmetrischen Schlüssel mit seinem privaten Schlüssel und dann mit dem symmetrischen Schlüssel den Druckauftrag.
8. Dann wird der Druckauftrag gedruckt.

Darüber sind Verfahren zum Drucken eines Dokuments aus den Druckschriften US 2003/081788 A1, WO 2021/054967 A1 und WO 2018/115667 A1 bekannt.

Daher liegt der vorliegenden Anmeldung die Aufgabe zugrunde, ein Verfahren zum Betreiben eines Drucksystems bereitzustellen, welches in einfacher Weise und gleichzeitig sicherer Weise ein Drucken von Druckaufträgen an einer Druckvorrichtung des Drucksystems ermöglicht.

Die Aufgabe wird gemäß einem ersten Aspekt gelöst durch ein Verfahren gemäß Anspruch 1. Das Verfahren zum Betreiben eines Drucksystems mit mindestens einem Druckserver und mindestens einer mit dem Druckserver kommunikativ verbindbaren Druckvorrichtung umfasst:
- Erhalten, durch den Druckserver, eines mit einem öffentlichen Druckauftragsschlüssel eines Druckauftragsschlüsselpaares verschlüsselten Druckauftrags von einer kommunikativ verbindbaren Computervorrichtung,
- Erhalten, durch den Druckserver, eines mit einem öffentlichen Druckvorrichtungsschlüssel eines Druckvorrichtungsschlüsselpaares verschlüsselten privaten Druckauftragsschlüssel des Druckauftragsschlüsselpaares von einem mobilen Nutzerendgerät,
- wobei das Druckvorrichtungsschlüsselpaar der Druckvorrichtung zugeordnet ist,
- Übertragen, durch den Druckserver, des erhaltenen verschlüsselten privaten Druckauftragsschlüssels an die Druckvorrichtung, und
- Übertragen, durch den Druckserver, des erhaltenen verschlüsselten Druckauftrags an die Druckvorrichtung zum Ausdrucken des Druckauftrags durch die Druckvorrichtung.

Indem im Gegensatz zum Stand der Technik anmeldungsgemäß zwei (asynchrone) Schlüsselpaare und insbesondere ein (in der Regel ohnehin vorgesehenes) mobiles Nutzerendgerät (eines berechtigten Nutzers) verwendet werden, kann in einfacher Weise und gleichzeitig sicherer Weise das Drucken von Druckaufträgen an einer Druckvorrichtung des Drucksystems erfolgen. Der Einsatz von Kartenlesegeräten und Signaturkarten kann entfallen und damit der Aufwand für ein solches Sicherheitssystem.

Das Verfahren dient dem Betreiben eines Drucksystems, zumindest eines Druckservers eines Drucksystems. Ein Drucksystem umfasst mindestens einen Druckserver und mindestens eine mit dem Druckserver kommunikativ verbindbare Druckvorrichtung. Vorzugsweise kann der Druckserver über mindestens ein Kommunikationsnetz mit der Druckvorrichtung kommunikativ verbindbar sein. Das drahtlose und/oder drahtgebundene Kommunikationsnetz kann mindestens ein Netzwerk umfassen, wie beispielsweise ein Local Area Network (LAN), ein Wireless LAN (WLAN), ein Wide Area Network (WAN) und/oder dergleichen.

Die mindestens eine Druckvorrichtung des Drucksystems ist vorzugsweise ein Netzwerkdrucker. Ein Netzwerkdrucker kann eine Anzeige zum Beispiel in Form eines Displays aufweisen. Ein Netzwerkdrucker kann einen Prozessor, Speichermittel, Schnittstellen, etc. umfassen. Eine anmeldungsgemäße Druckvorrichtung umfasst zumindest eine Druckfunktion, beispielsweise in Form eines Druckmoduls. Weitere Funktionen, wie eine Scanner-Funktion und/oder eine Fax-Funktion, können implementiert sein.

Ein Druckserver kann durch mindestens eine Rechenvorrichtung mit Serverfunktionalität gebildet sein und insbesondere einen Prozessor, Speichermittel, Schnittstellen, etc. umfassen.

Mit dem Drucksystem kann mindestens eine Computervorrichtung verbindbar sein, insbesondere in Form eines (stationären) Arbeitsplatzrechners bzw. Computers. Bei einer Ausführungsform kann das Drucksystem die mindestens eine Computervorrichtung umfassen.

Gemäß dem anmeldungsgemäßen Verfahren erhält der Druckserver einen verschlüsselten Druckauftrag bzw. Druckjob. Der Druckauftrag kann insbesondere durch mindestens eine mit dem Kommunikationsnetz verbindbare Computervorrichtung generiert werden.

Zum Verschlüsseln des Druckauftrags bzw. der Druckdaten wird vorgeschlagen, eine asynchrone Verschlüsselung (auch Public-Key-Verschlüsselungsverfahren genannt) zu verwenden. Bei einem derartigen kryptographisches Verfahren wird ein Schlüsselpaar bereitgestellt, das aus einem geheimen Teil (privater Schlüssel) und einem nicht geheimen Teil (öffentlicher Schlüssel) besteht. Grundsätzlich ermöglicht ein öffentlicher Schlüssel jedem, Daten für den Besitzer des privaten Schlüssels zu verschlüsseln. Der private Schlüssel ermöglicht es seinem Besitzer, mit dem öffentlichen Schlüssel verschlüsselte Daten zu entschlüsseln.

Anmeldungsgemäß ist ein Druckauftrag mit einem öffentlichen Druckauftragsschlüssel eines (asynchronen) Druckauftragsschlüsselpaares verschlüsselt. Dieser verschlüsselte Druckauftrag wird durch den Druckserver von der Computervorrichtung empfangen. Die Computervorrichtung kann den verschlüsselten Druckauftrag insbesondere ausgesendet haben.

Um ein sicheres Ausdrucken des Druckauftrags durch die Druckvorrichtung zu ermöglichen, wird anmeldungsgemäß vorgeschlagen, den verschlüsselten Druckauftrag an die Druckvorrichtung zu übertragen, um insbesondere ein Entschlüsseln des Druckauftrags durch die Druckvorrichtung zu ermöglichen. Hierzu ist es erforderlich, den privaten Druckauftragsschlüssel des Druckauftragsschlüsselpaares ebenfalls der Druckvorrichtung bereitzustellen.

Um den privaten Druckauftragsschlüssel in sicherer Weise an die Druckvorrichtung zu übertragen, wird anmeldungsgemäß vorgeschlagen, diesen in verschlüsselter Form an die Druckvorrichtung zu übertragen. Anmeldungsgemäß wird insbesondere vorgeschlagen, für die Verschlüsselung des privaten Druckauftragsschlüssels des Druckauftragsschlüsselpaares wiederum ein asynchrones Verschlüsselungsverfahren zu verwenden.

Gemäß der Anmeldung ist vorgesehen, dass der Druckserver den mit einem öffentlichen Druckvorrichtungsschlüssel eines (asynchronen) Druckvorrichtungsschlüsselpaares verschlüsselten privaten Druckauftragsschlüssel des Druckauftragsschlüsselpaares von einem mobilen Nutzerendgerät (des berechtigten Nutzers) erhält. Das Druckvorrichtungsschlüsselpaar ist anmeldungsgemäß (eindeutig) der zu verwendenden Druckvorrichtung zugeordnet.

Dies meint insbesondere, dass der öffentliche Druckvorrichtungsschlüssel an der Druckvorrichtung einem mobilen Nutzerendgerät bereitgestellt wird und der zugehörige private Druckvorrichtungsschlüssel in der Druckvorrichtung gespeichert ist. Ein Bereitstellen eines öffentlichen Druckvorrichtungsschlüssels an der Druckvorrichtung meint insbesondere, dass ein mobiles Nutzerendgerät diesen öffentlichen Druckvorrichtungsschlüssel nur dann empfangen kann, wenn es sich (und damit der Nutzer) in unmittelbarer (physischer) Nähe (z.B. zumindest näher als 5 m, vorzugsweise zumindest näher als 1 m, und/oder vorzugweise in dem Raum, in dem die Druckvorrichtung angeordnet ist) zu der Druckvorrichtung befindet.

In einem Datenspeicher des mobilen Nutzerendgeräts kann der private Druckauftragsschlüssel gespeichert sein. Dieser kann unter Nutzung des öffentlichen Druckvorrichtungsschlüssels verschlüsselt werden. Der verschlüsselte private Druckauftragsschlüssel kann ausgesendet werden. Anders ausgedrückt, kann der Druckserver ein mit einem öffentlichen Druckvorrichtungsschlüssel eines Druckvorrichtungsschlüsselpaares verschlüsselten privaten Druckauftragsschlüssel des Druckauftragsschlüsselpaares von einem mobilen Nutzerendgerät erhalten bzw. empfangen.

Anmeldungsgemäß erfolgt ein Übertragen des verschlüsselten privaten Druckauftragsschlüssels und des verschlüsselten Druckauftrags, so dass der Druckvorrichtung ein Entschlüsseln des Druckauftrags ermöglicht wird. Bei einer Variante der Anmeldung erfolgt zunächst die Übertragung des verschlüsselten privaten Druckauftragsschlüssels. Nach einer Entschlüsselung des verschlüsselten privaten Druckauftragsschlüssels kann der zugehörige verschlüsselte Druckauftrag angefordert werden. Als Antwort auf diese Aufforderung kann der zugehörige verschlüsselte Druckauftrag übertragen werden.

In besonders sicherer Weise kann ein Drucken eines Dokuments oder dergleichen ermöglicht werden. Es erfolgt anmeldungsgemäß sowohl eine druckauftragsspezifische als auch druckvorrichtungsspezifische Verschlüsselung. Die Sicherheit wird hierdurch im Vergleich zum Stand der Technik erhöht.

Bei einer Ausführungsform kann der Druckserver in der Druckvorrichtung integriert sein. Kommunikativ verbindbar meint in diesem Fall insbesondere eine interne Kommunikationsverbindung zwischen Druckserver und Druckvorrichtung.

Ferner kann der Druckserver ein verteilt angeordneter Druckserver sein. Beispielsweise kann der Druckserver durch zwei verteilt angeordnete Druckserverkomponenten gebildet sein. Insbesondere kann eine erste Druckserverkomponente angeordnet sein, eingerichtet zum Erhalten des mit einem öffentlichen Druckauftragsschlüssel eines Druckauftragsschlüsselpaares verschlüsselten Druckauftrags von einer mit der Druckserveranordnung kommunikativ verbindbaren Computervorrichtung. Die erste Druckserverkomponente kann zum Übertragen des erhaltenen verschlüsselten Druckauftrags an die Druckvorrichtung zum Weiterverarbeiten des Druckauftrags durch die Druckvorrichtung eingerichtet sein. Die erste Druckserverkomponente kann in der Druckvorrichtung oder der Computervorrichtung oder einer zusätzlichen Rechenvorrichtung implementiert sein. Insbesondere kann die erste Druckserverkomponente sämtliche Schritte (z.B. Erhalten, Speichern, Senden bzw. Bereitstellen etc.) durchführen bzw. Steuern, die den Druckauftrag betreffen.

Eine zweite (insbesondere entfernt von der ersten Druckserverkomponente) angeordnete Druckserverkomponente kann eingerichtet sein zum Erhalten eines mit einem öffentlichen Druckvorrichtungsschlüssel eines Druckvorrichtungsschlüsselpaares verschlüsselten privaten Druckauftragsschlüssels des Druckauftragsschlüsselpaares von einem mobilen Nutzerendgerät. Die zweite Druckserverkomponente kann zum Übertragen des erhaltenen verschlüsselten privaten Druckauftragsschlüssels an die Druckvorrichtung eingerichtet sein. Die zweite Druckserverkomponente kann in der Druckvorrichtung oder der Computervorrichtung oder einer zusätzlichen Rechenvorrichtung implementiert sein. Insbesondere kann die zweite Druckserverkomponente sämtliche Schritte (z.B. Erhalten, Senden bzw. Bereitstellen etc.) durchführen bzw. steuern, die den verschlüsselten privaten Druckauftragsschlüssel betreffen.

Gemäß einer weiteren Ausführungsform des anmeldungsgemäßen Verfahrens kann der private Druckvorrichtungsschlüssel des Druckvorrichtungsschlüsselpaares in einem Datenspeicher der Druckvorrichtung gespeichert sein. Das Verfahren kann umfassen:
- (Lokales) Entschlüsseln, durch die Druckvorrichtung, des erhaltenen verschlüsselten privaten Druckauftragsschlüssels mit dem gespeicherten privaten Druckvorrichtungsschlüssel des Druckvorrichtungsschlüsselpaares, und insbesondere
- (Lokales) Entschlüsseln, durch die Druckvorrichtung, des erhaltenen verschlüsselten Druckauftrags mit dem entschlüsselten privaten Druckauftragsschlüssel.

Anders ausgedrückt, entschlüsselt die Druckvorrichtung (insbesondere ein entsprechend eingerichtetes Entschlüsselungsmodul der Druckvorrichtung) zunächst den mit dem öffentlichen Druckvorrichtungsschlüssel des Druckvorrichtungsschlüsselpaares verschlüsselten privaten Druckauftragsschlüssel unter Nutzung des privaten Druckvorrichtungsschlüssels von diesem Druckvorrichtungsschlüsselpaar. Der private Druckvorrichtungsschlüssel kann insbesondere in einem (gesicherten) Datenspeicher der Druckvorrichtung gespeichert sein.

Anschließend (beispielsweise nachdem der zugehörige verschlüsselte Druckauftrag als Antwort auf eine entsprechende Anforderung erhalten wurde) kann die Druckvorrichtung (insbesondere ein entsprechend eingerichtetes Entschlüsselungsmodul der Druckvorrichtung) den mit dem öffentlichen Druckauftragsschlüssel des Druckauftragsschlüsselpaares verschlüsselten Druckauftrag unter Nutzung des entschlüsselten privaten Druckauftragsschlüssels von diesem Druckauftragsschlüsselpaar entschlüsseln.

Vorzugsweise kann nach einem Entschlüsseln, gemäß einer weiteren Ausführungsform des Verfahrens, ein Drucken, durch die Druckvorrichtung, des entschlüsselten Druckauftrags erfolgen. Insbesondere kann der Druckvorgangunmittelbar nach einer (erfolgreichen) Entschlüsselung des Druckauftrags erfolgen.

Gemäß einer bevorzugten Ausführungsform des anmeldungsgemäßen Verfahrens kann das Verfahren umfassen:
- Bereitstellen (insbesondere Generieren), durch die Computervorrichtung, des Druckauftragsschlüsselpaares, insbesondere bei einer Erstellung des Druckauftrags,
- Verschlüsseln des Druckauftrags mit dem öffentlichen Druckauftragsschlüssel des bereitgestellten Druckauftragsschlüsselpaares,
- Bewirken, durch die Computervorrichtung, eines Übertragens des verschlüsselten Druckauftrags an den Druckserver (und/oder die Druckvorrichtung), und
- Bereitstellen, durch die Computervorrichtung, des privaten Druckauftragsschlüssels des bereitgestellten Druckauftragsschlüsselpaares an der Computervorrichtung derart, dass das mobile Nutzerendgerät den privaten Druckauftragsschlüssel (nur (unmittelbar) an der Computervorrichtung) erhalten kann.

Ein Bereitstellen eines Druckauftragsschlüsselpaares kann insbesondere bei bzw. nach der (herkömmlichen) Erstellung eines Druckauftrags durch die Computervorrichtung erfolgen. Beispielsweise kann ein Nutzer durch ein Betätigen einer Nutzerschnittstelle in herkömmlicher Weise ein Drucken eines Dokuments (z.B. Text, Bild etc.) bewirken. Dann kann die Computervorrichtung (insbesondere ein entsprechend eingerichtetes Verschlüsselungsmodul der Computervorrichtung) den Druckauftrag mit dem bereitgestellten öffentlichen Druckauftragsschlüssel verschlüsseln. Der verschlüsselte Druckauftrag kann an den Druckserver durch die Computervorrichtung übertragen werden. Anders ausgedrückt, kann der Druckserver in zuvor beschriebener Weise den Druckauftrag von der Computervorrichtung erhalten.

Um in einfacher und sicherer Weise ein Übertragen des privaten Druckauftragsschlüssels zu ermöglichen, kann dieser durch die Computervorrichtung, insbesondere an der Computervorrichtung, dem mobilen Nutzerendgerät bereitgestellt werden, so dass dieses den privaten Druckauftragsschlüssel an der Computervorrichtung empfangen kann. Ein Bereitstellen eines privaten Druckauftragsschlüssels an der Computervorrichtung meint insbesondere, dass ein mobiles Nutzerendgerät diesen privaten Druckauftragsschlüssel nur dann empfangen kann, wenn es sich in unmittelbarer (physischer) Nähe (z.B. zumindest näher als 5 m, vorzugsweise zumindest näher als 1 m; vorzugsweise in dem gleichen Raum wie die Computervorrichtung) zu der Computervorrichtung befindet.

Insbesondere kann der Nutzer, der den Druckauftrag an der Computervorrichtung erstellt hat, über das mobile Nutzerendgerät verfügen. Anders ausgedrückt, kann das mobile Nutzerendgerät dem berechtigten Nutzer (eindeutig) zugeordnet sein.

Grundsätzlich kann das Übertragen des privaten Druckauftragsschlüssels in beliebiger Weise erfolgen, so lange nur sichergestellt ist, dass sich das mobile Nutzerendgerät an der Computervorrichtung befinden muss, um diesen zu empfangen. Hierdurch kann die Sicherheit weiter erhöht werden.

Gemäß einer besonders bevorzugten Ausführungsform des anmeldungsgemäßen Verfahrens kann das Bereitstellen, durch die Computervorrichtung, des privaten Druckauftragsschlüssels des bereitgestellten Druckauftragsschlüsselpaares ein Anzeigen eines optischen Druckauftragscodes durch eine optische Anzeige (bzw. Bildschirm) der Computervorrichtung umfassen. Der optische Druckauftragscode kann vorzugsweise den privaten Druckauftragsschlüssel enthalten. Indem der private Druckauftragsschlüssel codiert angezeigt wird, kann die Sicherheit in einfacher Weise erhöht werden. Beispielsweise kann der optische Druckauftragscode ein Barcode sein, wie ein QR-Code, 2D-Barcode und/oder dergleichen.

Der optische Druckauftragscode kann durch ein optisches Erfassungsmodul des mobilen Nutzerendgeräts erfasst werden. Insbesondere kann das optische Erfassungsmodul eine Kamera (mit einem Bildauswertemodul) sein. Zur Erfassung des Druckauftragscodes ist es insbesondere erforderlich, dass sich das mobile Nutzerendgerät in der unmittelbaren Nähe (z.B. kleiner al 5 m, vorzugsweise kleiner als 1 m) zu der Computervorrichtung befinden muss.

Vorzugsweise kann der private Druckauftragsschlüssel aus dem Druckauftragscode extrahiert werden. Insbesondere kann der aus dem optischen Druckauftragscode extrahierte private Druckauftragsschlüssel in einem (sicheren) Datenspeicher des mobilen Nutzerendgeräts gespeichert werden. Beispielsweise kann der private Druckauftragsschlüssel verschlüsselt in dem Datenspeicher des mobilen Nutzerendgeräts gespeichert werden.

Alternativ oder zusätzlich kann der private Druckauftragsschlüssel über eine zwischen dem mobilen Nutzerendgerät und der Computervorrichtung herstellbare Nahfeldkommunikationsverbindung übertragen werden. Nicht abschließende Beispiele sind RFID-Verbindung, eine NFC-Verbindung und eine Bluetooth-Verbindung. Bei noch anderen Varianten kann auch eine kabelgebundene Übertragung erfolgen.

Gemäß einer weiteren Ausführungsform des anmeldungsgemäßen Verfahrens kann der private Druckauftragsschlüssel des bereitgestellten Druckauftragsschlüsselpaares auf (bzw. in) der (und insbesondere durch die) Computervorrichtung nach einem Erhalt des privaten Druckauftragsschlüssels durch das mobile Nutzerendgerät gelöscht werden. Indem der private Druckauftragsschlüssel gelöscht wird, wenn dieser auf dem mobilen Nutzerendgerät vorhanden ist, kann die Sicherheit noch weiter verbessert werden. Insbesondere kann vermieden werden, dass sich der Druckauftragsschlüssel an mehreren Orten gleichzeitig befindet. Nach einem Löschen auf der Computervorrichtung kann dieser nicht mehr von unberechtigten Nutzern von der Computervorrichtung erfasst werden.

Gemäß einer Ausführungsform des anmeldungsgemäßen Verfahrens kann das Löschen nach einem Erhalt durch das mobile Nutzerendgerät ein Löschen des privaten Druckauftragsschlüssels bei Ablauf einer vorgegebenen Zeitdauer nach dem Start des Anzeigens des optischen Druckauftragscodes erfolgen. Bei dieser Ausführungsform wird insbesondere angenommen, dass das mobile Nutzerendgerät den optischen Druckauftragscode innerhalb der vorgegebenen Zeitdauer (z.B. zwischen 5 s und 5 min, vorzugsweise zwischen 10 s und 30 s) erhalten hat, also insbesondere eingescannt hat. Ist dies nicht der Fall gewesen, kann es erforderlich sein, das Schlüsselpaar neu zu generieren.

Alternativ oder zusätzlich kann das Löschen des privaten Druckauftragsschlüssels bei Erhalt einer Bestätigungsnachricht, durch die Computervorrichtung, erfolgen. Die Bestätigungsnachricht kann den Erhalt des privaten Druckauftragsschlüssels durch das mobile Nutzerendgerät bestätigen. Beispielsweise kann das mobile Nutzerendgerät nach einer (erfolgreichen) Abspeicherung des erhaltenen privaten Druckauftragsschlüssels eine entsprechende Bestätigungsnachricht aussenden. Auch kann die Aussendung durch eine Nutzeraktion auf dem mobilen Nutzerendgerät erfolgen. So kann der Nutzer aktiv die erfolgreiche Erfassung bestätigen und eine Aussendung hierdurch auslösen.

Vorzugsweise kann auf dem mobilen Nutzerendgerät eine Druckanwendung in Form eines installierbaren Computerprogramms (insbesondere eine sogenannte "App") vorgesehen sein, welches durch einen Prozessor des mobilen Nutzerendgeräts ausführbar ist bzw. ausgeführt wird. Die Druckanwendung kann insbesondere die durch das mobile Nutzerendgerät durchführbaren Verfahrensschritte steuern, wie noch näher beschrieben werden wird.

Darüber hinaus kann der optische Druckauftragscode mindestens ein weiteres Druckauftragsdatum enthalten, insbesondere ausgewählt aus der Gruppe, umfassend:
- Druckauftragskennung (Kennung, die für den Druckauftrag erzeugt wird),
- Computervorrichtungskennung (beispielsweise ein eindeutiger Code oder eine eindeutige (Netzwerk-) Adresse),
- Nutzerkennung (insbesondere des Nutzers der Computervorrichtung und/oder des Nutzerendgeräts),
- Druckvorrichtungskennung der ausgewählten Druckvorrichtung (beispielsweise ein eindeutiger Code) und/oder eine eindeutige (Netzwerk-) Adresse der ausgewählten Druckvorrichtung,
- Zeitdatum (beispielsweise ein Zeitstempel der Druckauftragsgenerierung).

Es versteht sich, dass zwei oder mehr der vorgenannten Druckauftragsdaten enthalten sein können. Mindestens eines dieser Druckauftragsdaten (auch können mehrere kombiniert werden) kann als Druckkennung verwendet werden, wie noch näher beschrieben wird.

Um die Sicherheit noch weiter zu erhöhen, kann gemäß einer weiteren Ausführungsform des anmeldungsgemäßen Verfahrens das Bereitstellen des Druckauftragsschlüsselpaares ein Generieren eines neuen Druckauftragsschlüsselpaares für jeden (neu) erstellten Druckauftrag umfassen. Insbesondere kann die Computervorrichtung (insbesondere ein entsprechend eingerichteter Schlüsselgenerator) für jeden erstellten Druckauftrag ein neues Druckauftragsschlüsselpaar generieren.

Bei anderen Varianten kann ein Schlüsselpaar eine zeitliche Gültigkeit (z.B. zwischen 1 h und 72 h) besitzen. Alternativ oder zusätzlich kann vorgesehen sein, dass ein Schlüsselpaar nur für eine bestimmte Anzahl an Druckaufträgen (z.B. zwischen 2 und 20 Druckaufträgen) gültig ist. Bei Ablauf der Gültigkeit kann ein neues Schlüsselpaar generiert werden.

Bei weiteren Varianten kann der Schlüsselgenerator in einer weiteren Rechenvorrichtung des Drucksystems implementiert sein und ein generiertes Schlüsselpaar an die Computervorrichtung übertragen (beispielsweise über eine verschlüsselte Kommunikationsverbindung auf eine Aufforderung durch die Computervorrichtung).

Wie bereits beschrieben wurde, kann, gemäß einer bevorzugten Ausführungsform des anmeldungsgemäßen Verfahrens, das Verfahren umfassen:
- Bereitstellen, durch die Druckvorrichtung, des öffentlichen Druckvorrichtungsschlüssels des bereitgestellten Druckvorrichtungsschlüsselpaares, derart, dass das mobile Nutzerendgerät den öffentlichen Druckvorrichtungsschlüssels (nur) an der Druckvorrichtung erhalten kann, und
- Speichern des privaten Druckvorrichtungsschlüssels des bereitgestellten Druckvorrichtungsschlüsselpaares in einem (sicheren) Datenspeicher der Druckvorrichtung.

Gemäß einer weiteren Ausführungsform des anmeldungsgemäßen Verfahrens kann das Bereitstellen, durch die Druckvorrichtung, des öffentlichen Druckvorrichtungsschlüssels des bereitgestellten Druckvorrichtungsschlüsselpaares ein Anzeigen eines optischen Druckvorrichtungscodes umfassen. Der optische Druckvorrichtungscode kann den öffentlichen Druckvorrichtungsschlüssel enthalten.

Der optische Druckvorrichtungscode (vorzugsweise ein Barcode, wie ein QR- und/oder 2D- Barcode) kann durch ein optisches Erfassungsmodul des mobilen Nutzerendgeräts erfasst werden. Insbesondere kann das optische Erfassungsmodul eine Kamera (mit einem Bildauswertemodul) sein. Zur Erfassung des Druckvorrichtungscodes ist es insbesondere erforderlich, dass sich das mobile Nutzerendgerät in der Nähe (kleiner als 5m, vorzugsweise kleiner als 1 m) zu der Druckvorrichtung befinden muss.

Alternativ kann auch hier eine Nahfeldkommunikationsverbindung verwendet werden. Nicht abschließende Beispiele sind eine RFID-Verbindung, eine NFC-Verbindung und eine Bluetooth-Verbindung. Bei noch anderen Varianten kann auch eine kabelgebundene Übertragung erfolgen.

Der optische Druckvorrichtungscode kann mindestens ein weiteres Druckvorrichtungsdatum enthalten, wie beispielsweise eine Druckvorrichtungskennung.

Gemäß einer weiteren Ausführungsform des anmeldungsgemäßen Verfahrens kann der öffentliche Druckvorrichtungsschlüssel ein statischer bzw. permanent gültiger öffentlicher Druckvorrichtungsschlüssel sein. Insbesondere kann der optische Druckvorrichtungscode ein statischer bzw. permanent gültiger öffentlicher Druckvorrichtungsschlüssel sein, beispielsweise in Form eines dauerhaft an einer (sichtbaren) Außenwand bzw. -seite der Druckvorrichtung angebrachten Druckvorrichtungscode (z.B. ein Barcode). Beispielsweise kann dieser Druckvorrichtungscode aufgedruckt sein.

Wie bereits beschrieben wurde, kann der optische Druckvorrichtungscode durch ein optisches Erfassungsmodul des mobilen Nutzerendgeräts erfasst werden. Der gespeicherte private Druckauftragsschlüssel kann, gemäß einer weiteren Ausführungsform des anmeldungsgemäßen Verfahren, durch das mobile Nutzerendgerät, mit dem (in dem erfassten Druckvorrichtungscode enthaltenen) öffentlichen Druckvorrichtungsschlüssel verschlüsselt werden. Dies kann insbesondere unmittelbar nach der Erfassung erfolgen.

Der verschlüsselte private Druckauftragsschlüssel kann, durch das mobile Nutzerendgerät, an den Druckserver (über das mindestens eine Kommunikationsnetz) übertragen werden. Vorzugsweise kann das Übertragen unmittelbar nach dem Verschlüsseln des privaten Druckauftragsschlüssels erfolgen. Das Übertragen kann insbesondere gleichzeitig eine Druckanforderungsnachricht sein. Insbesondere kann durch die unmittelbare Durchführung der Verschlüsselung und Übertragung sichergestellt werden, dass sich der berechtigte Nutzer noch an der Druckvorrichtung (tatsächlich) befindet, wenn der Druckauftrag ausgedruckt wird. Gemäß einer weiteren bevorzugten Ausführungsform des anmeldungsgemäßen Verfahrens kann das Erhalten, durch den Druckserver, des verschlüsselten Druckauftrags ein Erhalten einer ersten Druckkennung umfassen. Das Erhalten, durch den Druckserver, des verschlüsselten privaten Druckauftragsschlüssels kann ein Erhalten einer weiteren Druckkennung umfassen. Das Übertragen des erhaltenen verschlüsselten Druckauftrags an die Druckvorrichtung und des erhaltenen verschlüsselten privaten Druckauftragsschlüssel an die Druckvorrichtung kann auf der ersten Druckkennung und der weiteren Druckkennung basieren. Die Druckkennung kann insbesondere ein Datum sein, welches ein Zuordnen des Druckauftrags zu dem zugehörigen privaten Druckauftragsschlüssel in insbesondere eindeutiger Weise ermöglicht. Beispielsweise können die erste und die weitere Druckkennung jeweils eine (systemweit eindeutige) Druckauftragskennung und/oder eine (systemweit eindeutige) Nutzerkennung und/oder ein (systemweit eindeutige) Zeitdatum sein. Es versteht sich, dass auch andere Kennungen als Druckkennungen verwendet werden können.

Die Computervorrichtung kann die erste Druckkennung zusammen mit dem verschlüsselten Druckauftrag versenden. Ferner kann die Computervorrichtung die weitere Druckkennung zusammen mit dem privaten Druckauftragsschlüssel dem mobilen Nutzerendgerät bereitstellen. Beispielsweise kann die weitere Druckkennung bei der Generierung des Druckauftragscode in diesen Code integriert werden. Auch kann bei einer Nahfeldkommunikationsverbindung die weitere Druckkennung mit übertragen werden.

Wie bereits beschrieben wurde, können die erste und die weitere Druckkennung (die insbesondere identisch sind) ein Zuordnen zwischen Druckauftrag und zugehörigen verschlüsselten privaten Druckauftragsschlüssel ermöglichen.

Bei einer bevorzugten Variante der Anmeldung kann der verschlüsselte private Druckauftragsschlüssel mit der (vorzugsweise ebenfalls verschlüsselten) weiteren Druckkennung zunächst an die Druckvorrichtung gesendet werden. Dann kann (bei einer erfolgreichen Entschlüsselung) die (entschlüsselte) weitere Druckkennung in Form einer Anforderungsnachricht an den Druckserver durch die Druckvorrichtung gesendet werden. Als Antwort hierauf kann der zugehörige verschlüsselte Druckauftrag, bestimmbar durch die zugeordnete erste Druckkennung, an die anfordernde Druckvorrichtung durch den Druckserver gesendet werden.

Gemäß einer weiteren Ausführungsform des anmeldungsgemäßen Verfahrens kann das Verfahren umfassen - Speichern, durch den Druckserver, des erhaltenen verschlüsselten Druckauftrags zusammen mit der erhaltenen ersten Druckkennung in einem Datenspeicher des Druckservers.

Da in der Regel die Computervorrichtung, die den Druckauftrag erstellt, von der Druckvorrichtung entfernt angeordnet ist, kann der zunächst erhaltene Druckauftragsdatensatz, enthaltend zumindest die erste Druckkennung und den verschlüsselten Druckauftrag, in einem (sicheren) Datenspeicher (beispielsweise verschlüsselt) gespeichert werden. Bei Empfang einer Druckanforderungsnachricht von der Druckvorrichtung, enthaltend insbesondere die weitere Druckkennung, oder einer Druckanforderungsnachricht von dem mobilen Nutzerendgerät, enthaltend insbesondere die weitere Druckkennung und den verschlüsselten privaten Druckauftragsschlüssel, kann der gespeicherte Druckauftrag bestimmt und insbesondere an die Druckvorrichtung weitergeleitet werden. Die Bestimmung kann insbesondere auf der Zuordnung zwischen erster und weiterer Kennung zu einem bestimmten Druckauftrag basieren.

Vorzugsweise kann das Verfahren ferner umfassen:
- Vergleichen, einer erhaltenen weiteren Druckkennung mit der mindestens einen gespeicherten ersten Druckkennung, und
- Übertragen, wenn in dem Vergleichsschritt eine Korrespondenz (insbesondere Identität) zwischen der erhaltenen weiteren Druckkennung und einer gespeicherten ersten Druckkennung bestimmt wird, des gespeicherten verschlüsselten Druckauftrags mit der zu der erhaltenen weiteren Druckkennung korrespondierenden ersten Druckkennung (und, wenn noch nicht erfolgt, des erhaltenen verschlüsselten privaten Druckauftragsschlüssel mit der weiteren Druckkennung) an die Druckvorrichtung.

Wenn keine Korrespondenz festgestellt wird, wird kein Druckauftrag übertragen. Bei Varianten kann in diesem Fall eine (Standard-) Nachricht an das mobile Nutzerendgerät versendet werden, dass kein Druckauftrag bestimmt werden konnte. Insbesondere bei Feststellung einer Identität zwischen der empfangenen weiteren Druckkennung und einer bereits gespeicherten ersten Druckkennung kann dies das Übertragen der entsprechenden Daten an die Druckvorrichtung auslösen. Das Vergleichen und ggf. Übertragen kann insbesondere unmittelbar nach einem Erhalt der weiteren Kennung erfolgen.

Ein weiterer Aspekt der Erfindung ist ein Druckserver für ein Drucksystem. Drucksystem gemäß dem Anspruch 12. Der Druckserver umfasst mindestens ein Empfangsmodul (insbesondere eine Kommunikationsschnittstelle zum Verbinden mit einem Kommunikationsnetz), eingerichtet zum Erhalten eines mit einem öffentlichen Druckauftragsschlüssel eines Druckauftragsschlüsselpaares verschlüsselten Druckauftrags von einer Computervorrichtung. Das mindestens eine Empfangsmodul ist eingerichtet zum Erhalten eines mit einem öffentlichen Druckvorrichtungsschlüssel eines Druckvorrichtungsschlüsselpaares verschlüsselten privaten Druckauftragsschlüssels des Druckauftragsschlüsselpaares von einem mobilen Nutzerendgerät. Das Druckvorrichtungsschlüsselpaar ist der Druckvorrichtung zugeordnet. Der Druckserver umfasst mindestens ein Sendemodul (insbesondere eine Kommunikationsschnittstelle zum Verbinden mit einem Kommunikationsnetz) eingerichtet zum Übertragen des erhaltenen verschlüsselten Druckauftrags an eine Druckvorrichtung zum Ausdrucken des Druckauftrags durch die Druckvorrichtung. Das mindestens eine Sendemodul ist eingerichtet zum Übertragen des erhaltenen verschlüsselten privaten Druckauftragsschlüssels an die Druckvorrichtung.

Der Druckserver kann insbesondere mit dem vorbeschriebenen Verfahren betrieben werden. Der Druckserver kann, wie beschrieben, ein Datenspeicher zum Speichern von Druckauftragsdatensätzen umfassen, enthaltend jeweils einen verschlüsselten Druckauftrag und insbesondere eine zugehörige erste Druckkennung.

Ferner kann der Druckserver, gemäß einer weiteren Ausführungsform, ein Bestimmungsmodul umfassen, eingerichtet zum Vergleichen, einer erhaltenen weiteren Druckkennung mit der mindestens einen gespeicherten Druckkennung. Wenn eine Korrespondenz durch den Vergleich bestimmt wird, kann ein Übertragen der entsprechenden Daten erfolgen, wie bereits beschrieben wurde.

Ein weiterer Gegenstand der Anmeldung ist eine nicht-beanspruchte Druckvorrichtung für ein Drucksystem. Die Druckvorrichtung umfasst mindestens eine Schlüsselpaarbereitstellungseinrichtung, eingerichtet zum Bereitstellen eines Druckvorrichtungsschlüsselpaares, enthaltend einen privaten Druckvorrichtungsschlüssel und einen öffentlichen Druckvorrichtungsschlüssel. Die Druckvorrichtung umfasst mindestens einen Datenspeicher zum Speichern des privaten Druckvorrichtungsschlüssels des bereitgestellten Druckvorrichtungsschlüsselpaares. Die Schlüsselpaarbereitstellungseinrichtung ist eingerichtet zum Bereitstellen des öffentlichen Druckvorrichtungsschlüssels des bereitgestellten Druckvorrichtungsschlüsselpaares, derart, dass das mobile Nutzerendgerät den öffentlichen Druckvorrichtungsschlüssel an der Druckvorrichtung erhalten kann. Die Druckvorrichtung umfasst mindestens ein Empfangsmodul (insbesondere eine Kommunikationsschnittstelle zum Verbinden mit einem Kommunikationsnetz), eingerichtet zum Erhalten eines mit einem öffentlichen Druckauftragsschlüssel eines Druckauftragsschlüsselpaares verschlüsselten Druckauftrags von einem Druckserver, insbesondere einem zuvor beschriebenen Druckserver. Das Empfangsmodul ist eingerichtet zum Erhalten eines mit dem bereitgestellten öffentlichen Druckvorrichtungsschlüssel verschlüsselten privaten Druckauftragsschlüssels eines Druckauftragsschlüsselpaares von einem mobilen Nutzerendgerät (via dem Druckserver). Die Druckvorrichtung umfasst mindestens ein Entschlüsselungsmodul, eingerichtet zum Entschlüsseln des erhaltenen verschlüsselten privaten Druckauftragsschlüssels mit dem gespeicherten privaten Druckvorrichtungsschlüssel des Druckvorrichtungsschlüsselpaares. Das Entschlüsselungsmodul ist eingerichtet zum Entschlüsseln des erhaltenen verschlüsselten Druckauftrags mit dem entschlüsselten privaten Druckauftragsschlüssel.

Die Druckvorrichtung kann insbesondere mit dem vorbeschriebenen Verfahren zumindest teilweise betrieben werden. Ein entsprechendes Verfahren kann ein eigeständiger Aspekt der Anmeldung sein.

Gemäß einer Ausführungsform der anmeldungsgemäßen Druckvorrichtung kann die Druckvorrichtung ein Druckmodul umfassen, eingerichtet zum Drucken des entschlüsselten Druckauftrags.

Ein weiterer Aspekt der Erfindung ist ein Drucksystem gemäß dem Anspruch 13. Das Drucksystem umfasst mindestens einen zuvor beschriebenen Druckserver. Das Drucksystem umfasst mindestens eine mit dem Druckserver kommunikativ verbindbare Druckvorrichtung, insbesondere eine zuvor beschriebene Druckvorrichtung.

Vorzugsweise kann das Drucksystem mindestens ein mobiles Nutzerendgerät mit einer auf den Nutzerendgerät installierten Druckanwendung umfassen. Ferner kann das Drucksystem mindestens eine zuvor beschriebene Computervorrichtung umfassen.

Es versteht sich, dass ein Drucksystem zwei oder mehr Druckserver und/oder zwei oder mehr Druckvorrichtungen und/oder zwei oder mehr mobile Nutzerendgeräte und/oder zwei oder mehr Computervorrichtungen umfassen kann.

Ein weiterer Aspekt der Anmeldung ist eine nicht-beanspruchte Druckanwendung in Form eines auf einem mobilen Nutzerendgerät installierbaren Computerprogramms mit durch einen Prozessor des mobilen Nutzerendgeräts ausführbaren Computercode. Die Druckanwendung umfasst mindestens ein Empfangsmodul, eingerichtet zum Erhalten eines von einer Computervorrichtung bereitgestellten privaten Druckauftragsschlüssels eines Druckauftragsschlüsselpaares, wobei ein Druckauftrag mit einem öffentlichen Druckauftragsschlüssel des Druckauftragsschlüsselpaares durch die Computervorrichtung verschlüsselbar ist. Die Druckanwendung umfasst mindestens ein Speichermodul, eingerichtet zum Speichern des erhaltenen privaten Druckauftragsschlüssels in einem Datenspeicher des mobilen Nutzerendgeräts. Das Empfangsmodul ist eingerichtet zum Erhalten eines öffentlichen Druckvorrichtungsschlüssels eines durch eine Druckvorrichtung an der Druckvorrichtung bereitgestellten Druckvorrichtungsschlüsselpaares. Die Druckanwendung umfasst mindestens ein Verschlüsselungsmodul, eingerichtet zum Verschlüsseln des gespeicherten privaten Druckauftragsschlüssels mit dem erhaltenen öffentlichen Druckvorrichtungsschlüssel. Die Druckanwendung umfasst mindestens ein Sendemodul, eingerichtet zum Bewirken eines Aussendens des verschlüsselten privaten Druckauftragsschlüssels durch ein Kommunikationsmodul des mobilen Nutzerendgeräts.

Die genannten Module der Druckanwendung sind insbesondere durch einen Prozessor ausführbare Softwaremodule.

Die Druckanwendung in Form eines Computerprogramms, insbesondere die Instruktionen bzw. Programmanweisungen, können in einem

Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann ein mobiles Nutzerendgerät einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor des Nutzerendgeräts kann beispielsweise Zwischenergebnisse oder Ähnliches in dem Hauptspeicher speichern.

Gemäß einer bevorzugten Ausführungsform der anmeldungsgemäßen Druckanwendung kann das Sendemodul eingerichtet sein zum Bewirken eines Aussendens einer Bestätigungsnachricht bei einem Erhalt des privaten Druckauftragsschlüssels, insbesondere nach einer (erfolgreichen) Speicherung des privaten Druckauftragsschlüssels in dem Datenspeicher des mobilen Nutzerendgeräts.

Ein noch weiterer Aspekt der Anmeldung ist ein mobiles Nutzerendgerät mit einer auf dem mobilen Nutzerendgerät installierten zuvor beschrieben Druckanwendung.

Beispielhafte und nicht abschließende mobile Nutzerendgeräte sind hierbei Smartphones, Tablet-Computer, mobile Spielkonsolen, Laptops, Netbooks, Datenbrillen, Smart-Watches und ähnliche Wearables.

Ein zuvor beschriebenes Modul, Element etc. kann zumindest teilweise Hardwareelemente (z.B. Prozessor, Speichermittel etc.) und/oder zumindest teilweise Softwareelemente (z.B. ausführbaren Code) umfassen.

Die Merkmale der Verfahren, Druckserver, Druckvorrichtungen, Drucksysteme, mobilen Nutzerendgeräten und Druckanwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäßen Verfahren, den anmeldungsgemäßen Druckserver, die anmeldungsgemäße Druckvorrichtung, die anmeldungsgemäße Druckanwendung, das anmeldungsgemäße Drucksystem und das anmeldungsgemäße mobile Nutzerendgerät auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Drucksystems gemäß dem Stand der Technik,
- Fig. 2: eine schematische Ansicht eines Ausführungsbeispiels eines Druckservers gemäß der vorliegenden Erfindung,

- Fig. 3: eine schematische Ansicht eines Ausführungsbeispiels einer Druckvorrichtung gemäß der vorliegenden Anmeldung,
- Fig. 4: eine schematische Ansicht eines Ausführungsbeispiels eines Drucksystems gemäß der vorliegenden Erfindung und eines Ausführungsbeispiels einer Druckanwendung gemäß der vorliegenden Anmeldung,
- Fig. 5: ein Diagramm eines Ausführungsbeispiels eines Verfahrens gemäß der vorliegenden Anmeldung,
- Fig. 6: ein Diagramm eines weiteren Ausführungsbeispiels eines Verfahrens gemäß der vorliegenden Erfindung, und
- Fig. 7: ein Diagramm eines weiteren Ausführungsbeispiels eines Verfahrens gemäß der vorliegenden Anmeldung.

Ähnliche Bezugszeichen werden für zumindest ähnliche Elemente verwendet.

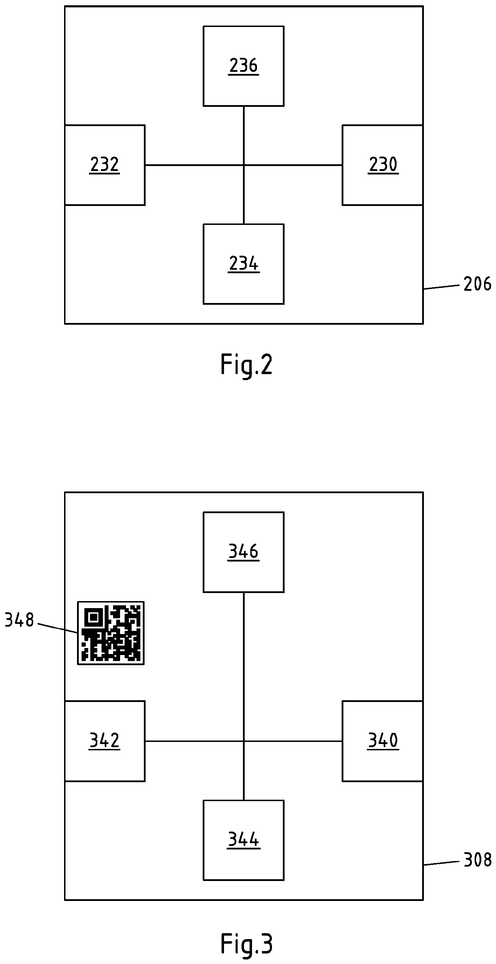

Die Figur 2 zeigt eine schematische Ansicht eines Ausführungsbeispiels eines Druckservers 206 gemäß der vorliegenden Erfindung, Der Druckserver 206 kann insbesondere in einem Drucksystem eingesetzt werden.

Der Druckserver 206 kann insbesondere durch mindestens eine Rechenvorrichtung mit mindestens einem Prozessor und Speichermitteln gebildet sein. Bei Varianten der Anmeldung kann ein Druckserver in einer Druckvorrichtung integriert sein, insbesondere in einer Druckvorrichtung gemäß der vorliegenden Anmeldung.

Der dargestellte Druckserver 206 umfasst ein Empfangsmodul 230, ein Sendemodul 232, einen Datenspeicher 234 und ein Bestimmungsmodul 236. Das Empfangsmodul 230 und das Sendemodul 232 können durch ein bidirektionales Kommunikationsmodul gebildet sein. Es versteht sich, dass bei anderen Varianten andere Module und/oder weitere Module vorgesehen sein können.

Das Empfangsmodul 230 kann insbesondere mindestens eine Kommunikationsschnittstelle zum Verbinden mit einem Kommunikationsnetz umfassen. Das Sendemodul 232 kann insbesondere mindestens eine Kommunikationsschnittstelle zum Verbinden mit einem Kommunikationsnetz (oder einer internen Verbindung zu einem Empfangsmodul einer Druckvorrichtung, in der der Druckserver in diesem Fall integriert ist) umfassen.

Es versteht sich, dass zwei oder mehr Kommunikationsschnittstellen jeweils vorgesehen sein können, insbesondere für eine entsprechende Anzahl unterschiedlicher Netzwerke (z.B. LAN, WLAN etc.).

Das mindestens eine Empfangsmodul 230 ist eingerichtet zumindest zum Erhalten eines mit einem öffentlichen Druckauftragsschlüssel eines

Druckauftragsschlüsselpaares verschlüsselten Druckauftrags von einer Computervorrichtung. Der erhaltene verschlüsselte Druckauftrag kann vorzugsweise in dem Datenspeicher 234 des Druckservers (temporär, beispielsweise für eine vorgegebene maximale Zeitdauer (z.B. 1 h bis 72 h)) gespeichert werden. Nach Ablauf dieser Zeitdauer kann der Auftrag gelöscht werden. Insbesondere kann ein Druckauftragsdatensatz empfangen bzw. erhalten werden, enthaltend den verschlüsselten Druckauftrag und vorzugsweise eine eindeutige erste Druckkennung. Dieser Datensatz kann in dem durchsuchbaren Datenspeicher gespeichert werden.

Ferner ist das mindestens eine Empfangsmodul 230 eingerichte zum Erhalten eines mit einem öffentlichen Druckvorrichtungsschlüssel eines Druckvorrichtungsschlüsselpaares verschlüsselten privaten Druckauftragsschlüssels des Druckauftragsschlüsselpaares von einem mobilen Nutzerendgerät. Das Druckvorrichtungsschlüsselpaar ist der für den Druckvorgang zu verwendenden Druckvorrichtung (eindeutig) zugeordnet.

Insbesondere kann ein Schlüsseldatensatz empfangen bzw. erhalten werden, enthaltend den verschlüsselten privaten Druckauftragsschlüssel und vorzugsweise eine eindeutige weitere Druckkennung, die zu der ersten Druckkennung korrespondiert, insbesondere identisch ist.

Insbesondere unmittelbar bei einem Erhalt eines Schlüsseldatensatzes (oder unmittelbar bei Erhalt einer Anforderungsnachricht von der Druckvorrichtung, wobei die Anforderungsnachricht zumindest die weitere Druckkennung umfassen kann) kann das Bestimmungsmodul 236 die weitere Druckkennung mit der mindestens einen gespeicherten ersten Druckkennung vergleichen. Wenn eine Korrespondenz, vorzugsweise Identität, zwischen der weiteren Druckkennung und der ersten Druckkennung durch das Bestimmungsmodul 236 bestimmt wird, kann dieses die Aussendung der entsprechenden Datensätze (oder bei einer Anforderungsnachricht nur des Druckauftragsdatensatzes) durch das Sendemodul 232 veranlassen.

Das Sendemodul kann alternativ unmittelbar bei einem Erhalt eines Schlüsseldatensatzes diesen an die Druckvorrichtung weiterleiten. In diesem Fall kann vorzugsweise die weitere Druckkennung ebenfalls durch den öffentlichen Druckvorrichtungsschlüssel verschlüsselt sein. Nach einer Entschlüsselung kann die Druckvorrichtung die Anforderungsnachricht (unmittelbar) aussenden und in entsprechender Weise der Druckserver diese Anforderungsnachricht empfangen. Wie beschrieben wurde, kann dann der zugehörige Druckauftragsdatensatz bestimmt und versendet werden.

Das mindestens eine Sendemodul 232 ist eingerichtet zum Übertragen des erhaltenen verschlüsselten Druckauftrags an eine Druckvorrichtung zum Ausdrucken des Druckauftrags durch die Druckvorrichtung, wie beschrieben wurde. Es sei angemerkt, dass ein Druckauftragsdatensatz Adressdaten und/oder eine Druckvorrichtungskennung enthalten kann.

Das mindestens eine Sendemodul 232 ist ferner eingerichtet zum Übertragen des erhaltenen verschlüsselten privaten Druckauftragsschlüssels an die Druckvorrichtung, wie beschrieben wurde. Es sei angemerkt, dass ein Druckauftragsdatensatz Adressdaten und/oder eine Druckvorrichtungskennung enthalten kann.

Die Figur 3 zeigt eine schematische Ansicht eines Ausführungsbeispiels einer Druckvorrichtung 308 gemäß der vorliegenden Anmeldung. Die Druckvorrichtung 308 kann insbesondere in einem Drucksystem eingesetzt werden.

Die Druckvorrichtung 308 kann insbesondere mindestens einem Prozessor und Speichermittel umfassen. Bei Varianten der Anmeldung kann die Druckvorrichtung einen vorbeschriebenen Druckserver umfassen.

Die Druckvorrichtung 308 ist ein Netzwerkdrucker 308, der zumindest eine Druckfunktionalität aufweist. Es versteht sich, dass weitere Funktionalitäten (z.B. Scanner-Funktionalität, Fax-Funktionalität) in einer Druckvorrichtung implementiert sein können.

Die dargestellte Druckvorrichtung 308 umfasst ein Empfangsmodul 340, eine Schlüsselpaarbereitstellungseinrichtung 348, einen (sicheren) Datenspeicher 342, ein Entschlüsselungsmodul 344 und ein Druckmodul 346.

Das Druckmodul 346 ist in herkömmlicher Weise dazu eingerichtet, einen Druckauftrag auszudrucken, insbesondere auf ein bedruckbares Medium (z.B. Papier).

Ein Empfangsmodul 340 kann insbesondere mindestens eine Kommunikationsschnittstelle zum Verbinden mit einem Kommunikationsnetz (oder einer internen Verbindung zu einem Sendemodul eines Druckservers, der in diesem Fall in der Druckvorrichtung integriert ist) umfassen. Es versteht sich, dass zwei oder mehr Kommunikationsschnittstellen jeweils vorgesehen sein können, insbesondere für eine entsprechende Anzahl unterschiedlicher Netzwerke (z.B. LAN, WLAN etc.).

Die mindestens eine Schlüsselpaarbereitstellungseinrichtung 348 ist eingerichtet zum Bereitstellen eines Druckvorrichtungsschlüsselpaar, enthaltend einen privaten Druckvorrichtungsschlüssel und einen öffentlichen Druckvorrichtungsschlüssel. Der mindestens eine Datenspeicher 342 ist zum Speichern des privaten Druckvorrichtungsschlüssels des bereitgestellten Druckvorrichtungsschlüsselpaares eingerichtet.

Die Schlüsselpaarbereitstellungseinrichtung 348 ist ferner eingerichtet zum Bereitstellen des öffentlichen Druckvorrichtungsschlüssels des bereitgestellten Druckvorrichtungsschlüsselpaares derart, dass das mobile Nutzerendgerät den öffentlichen Druckvorrichtungsschlüssels (nur) an der Druckvorrichtung 308 erhalten kann. In dem vorliegenden Ausführungsbeispiel ist dies dadurch umgesetzt, dass ein optischer Druckvorrichtungscode 348 (beispielsweise ein Barcode, insbesondere ein QR- und/oder 2D- Barcode) auf einer sichtbaren Außenseite der Druckvorrichtung 308 angeordnet ist.

Beispielsweise kann der Druckvorrichtungscode 348 auf der Außenseite der Druckvorrichtung 308 aufgedruckt sein oder ein Aufkleber, auf dem der Druckvorrichtungscode 348 aufgebracht ist, kann an einer Außenseite aufgeklebt sein. Bei Varianten der Anmeldung kann der Druckvorrichtungscode 348 auch durch ein (nicht gezeigtes) Display der Druckvorrichtung 308 angezeigt werden (beispielsweise nach einer manuellen Anforderung durch einen Nutzer).

Ein derartiger Druckvorrichtungscode 348 kann durch eine optische Erfassungseinrichtung eines mobilen Nutzerendgeräts erfasst bzw. detektiert werden. Der Druckvorrichtungscode 348 enthält zumindest den öffentlichen Druckvorrichtungsschlüssel. Weitere Daten, wie eine Druckvorrichtungskennung und/oder Adressdaten der Druckvorrichtung 308, können enthalten sein.

Das mindestens eine Empfangsmodul 340 ist eingerichtet zum Erhalten eines mit einem öffentlichen Druckauftragsschlüssel eines Druckauftragsschlüsselpaares verschlüsselten Druckauftrags von einem Druckserver, beispielsweise einem Druckserver 206 entsprechend dem Ausführungsbeispiel nach Figur 2.

Das mindestens eine Empfangsmodul 340 ist ferner eingerichtet zum Erhalten eines mit dem bereitgestellten öffentlichen Druckvorrichtungsschlüssel verschlüsselten privaten Druckauftragsschlüssel eines Druckauftragsschlüsselpaares von einem mobilen Nutzerendgerät, vorzugsweise via dem Druckserver. Insbesondere können der verschlüsselte Druckauftrag und der verschlüsselte private Druckauftragsschlüssel nahezu gleichzeitig empfangen werden. Auch ist denkbar, dass ein gemeinsamer Datensatz empfangen wird. Auch kann, wie beschrieben wurde, zunächst nur der verschlüsselte Schlüsseldatensatz empfangen werden und dann, als Antwort auf eine entsprechende Anforderungsnachricht, der verschlüsselte Druckauftrag.

Optional können die erste und die weitere Druckkennung vorgesehen sein, um in analoger Weise wie zuvor beschrieben wurde, eine Zuordnung von Druckauftrag und privatem Druckauftragsschlüssel zu ermöglichen.

Das mindestens eine Entschlüsselungsmodul 344 ist eingerichtet zum Entschlüsseln des erhaltenen verschlüsselten privaten Druckauftragsschlüssels mit dem gespeicherten privaten Druckvorrichtungsschlüssel des

Druckvorrichtungsschlüsselpaares. Insbesondere kann das Entschlüsselungsmodul 344 auf den Datenspeicher 342 zugreifen und den dort gespeicherten privaten Druckvorrichtungsschlüssel auf den erhaltenen verschlüsselten privaten Druckauftragsschlüssel anwenden.

Wie beschrieben wurde, kann nach dem Entschlüsseln eine Anforderungsnachricht, durch ein (nicht gezeigtes) Sendemodul, versendet werden, um den zugehörigen Druckauftrag anzufordern.

Das Entschlüsselungsmodul 344 ist ferner eingerichtet zum Entschlüsseln des erhaltenen verschlüsselten Druckauftrags mit dem entschlüsselten privaten Druckauftragsschlüssel. Der dann entschlüsselte Druckauftrag bzw. die entschlüsselten Druckdaten werden dann dem Druckmodul 346 zum Ausdrucken bereitgestellt.

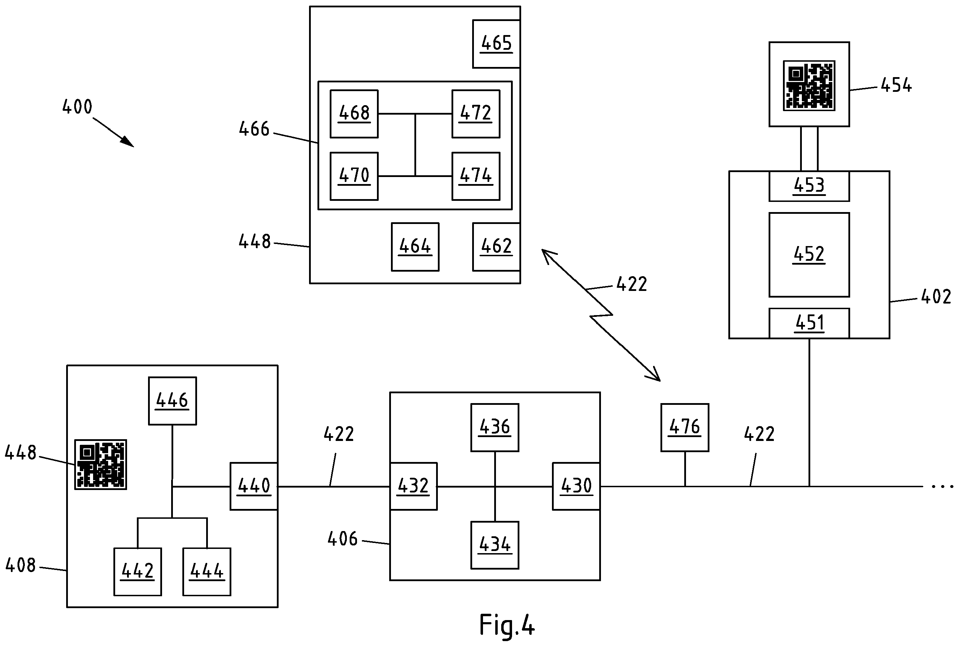

Die Figur 4 zeigt eine schematische Ansicht eines Ausführungsbeispiels eines Drucksystems 400 gemäß der vorliegenden Erfindung und ein Ausführungsbeispiel einer Druckanwendung 466 in Form eines ausführbaren Computerprogramms 466. Das Drucksystem 400, insbesondere ein Netzwerkdrucksystem 400, kann insbesondere in einem Bürogebäude implementiert sein.

Das Drucksystem 400 umfasst eine Druckvorrichtung 408 und einen mit der Druckvorrichtung 408 kommunikativ verbundenen Druckserver 406. Vorliegend ist ein (drahtloses und/oder drahtgebundenes) Kommunikationsnetz 422 vorgesehen. Wie bereits beschrieben wurde, kann bei Varianten der Anmeldung der Druckserver auch in der Druckvorrichtung integriert sein.

Die mindestens eine Druckvorrichtung 408 kann insbesondere entsprechend der Druckvorrichtung nach Figur 3 gebildet sein, so dass zur Vermeidung von Wiederholungen nachfolgend im Wesentlichen auf die Ausführungen zur Figur 3 verwiesen wird.

Der mindestens eine Druckserver 406 ist entsprechend dem Druckserver nach Figur 2 gebildet, so dass zur Vermeidung von Wiederholungen nachfolgend im Wesentlichen auf die Ausführungen zur Figur 2 verwiesen wird. Wie ferner zu erkennen ist, ist mindestens ein mobiles Nutzerendgerät 458 (beispielsweise ein Smartphone) und mindestens eine (zumindest temporär stationäre) Computervorrichtung 402 in Form eines Arbeitsplatzrechners 402 vorgesehen.

Vorzugsweise können eine Vielzahl von mobilen Nutzerendgeräten 458 und/oder eine Vielzahl von Computervorrichtungen vorgesehen sein. Eine Vielzahl von Computervorrichtungen kann die Druckvorrichtung 408 zum Ausdrucken als Netzwerkressource nutzen. Vorzugsweise kann das Drucksystem 400 das mindestens eine mobile Nutzerendgerät 458 und/oder die mindestens eine Computervorrichtung 402 umfassen.

Die mindestens eine Computervorrichtung 402 kann über ein Kommunikationsmodul 451 kommunikativ mit dem Druckserver 406 und der Druckvorrichtung 408 via dem Kommunikationsnetz 422 verbindbar sein. Das Drucksystem 400 kann das Kommunikationsnetz 422 umfassen.

Die Computervorrichtung 402 kann eine Anzeige 454 in Form eines Displays 454 bzw. Bildschirms 454 umfassen. Ein (zu Gunsten einer besseren Übersicht nicht dargestellter) Nutzer kann in herkömmlicher Weise einen Druckauftrag durch die Computervorrichtung 402 erstellen.

Die dargestellte Computervorrichtung 402 umfasst ein Bereitstellungsmodul 452 zum Bereitstellen des Druckauftragsschlüsselpaares, insbesondere bei einer Erstellung des Druckauftrags. Vorzugsweise kann das Bereitstellungsmodul 452 ein Schlüsselgenerierungsmodul 452 sein, eingerichtet zum Generieren des (asynchronen) Druckauftragsschlüsselpaares. Vorzugsweise kann das Schlüsselgenerierungsmodul 452 für jeden erstellten Druckauftrag ein neues Druckauftragsschlüsselpaar generieren (kann auch als Sessionkeypair bezeichnet werden). Wie bereits beschrieben wurde, kann bei anderen Varianten der Anmeldung ein Druckauftragsschlüsselpaar auch für eine Mehrzahl von Druckaufträgen verwendbar bzw. gültig sein.

Die Computervorrichtung 402 kann ein Verschlüsselungsmodul 453 umfassen, eingerichtet zum Verschlüsseln zumindest des Druckauftrags mit dem öffentlichen Druckauftragsschlüssel des bereitgestellten, insbesondere generierten, Druckauftragsschlüsselpaares. Anders ausgedrückt, können die Druckdaten unter Nutzung des generierten öffentlichen Druckauftragsschlüssels verschlüsselt werden. Dies umfasst insbesondere auch ein Verschlüsseln des Druckauftrags mit einem synchronen Schlüssel (der beispielsweise auch dem Druckserver bekannt ist) und ein anschließendes Verschlüsseln nur des synchronen Schlüssels mit dem öffentlichen Druckauftragsschlüssels. Dies kann insbesondere vorteilhaft sein hinsichtlich der erforderlichen Rechenzeit und/oder der zu übertragenen Datenmenge. Optional kann eine erste Druckkennung (die eindeutig dem Druckauftrag zugeordnet ist) mit verschlüsselt werden.

Nach einer Verschlüsslung des Druckauftrags kann das Kommunikationsmodul 451 der Computervorrichtung 402 den verschlüsselten Druckauftrag an den Druckserver 406 übertragen, insbesondere via dem Kommunikationsnetz 422. Insbesondere kann ein Druckauftragsdatensatz übertragen werden, enthaltend zumindest den Druckauftrag und die beschriebene erste Druckkennung.

Ferner kann ein Bereitstellen, durch die Computervorrichtung 402, des privaten Druckauftragsschlüssels des bereitgestellten Druckauftragsschlüsselpaares erfolgen derart, dass das mobile Nutzerendgerät 458 den privaten Druckauftragsschlüssel (nur) an der Computervorrichtung 402 erhalten kann. Dies meint insbesondere, dass ein entfernt (z.B. außerhalb des Raumes, in dem sich die Computervorrichtung befindet, und/oder mit einem Abstand von größer als 5 m, vorzugsweise 1 m, und/oder in dem Raum, in dem die Computervorrichtung angeordnet ist) von der Computervorrichtung 402 angeordnetes Nutzerendgerät den privaten Druckauftragsschlüssel nicht erfassen kann.

Das Bereitstellen des privaten Druckauftragsschlüssels des bereitgestellten Druckauftragsschlüsselpaares umfasst in dem vorliegenden Ausführungsbeispiel insbesondere ein Anzeigen eines optischen Druckauftragscodes 456 durch die optische Anzeige 454 der Computervorrichtung 402. Der optische Druckauftragscode 456 (vorzugsweise ein Barcode, wie ein QR Code) enthält insbesondere den privaten Druckauftragsschlüssel. Wie bereits beschrieben wurde, kann bei anderen Varianten der Anmeldung die Bereitstellung über eine Nahfeldkommunikationsverbindung erfolgen.

Vorzugsweise kann der Druckauftragscode 456 weiteren Daten umfassen, insbesondere zumindest die beschriebene weitere Druckkennung (die vorzugsweise identisch ist mit der ersten Druckkennung und ebenfalls eindeutig dem Druckauftrag zugeordnet ist). Ein derartiger Druckauftragscode 456 kann durch eine optische Erfassungseinrichtung 465 (insbesondere eine Kamera 465) des mobilen Nutzerendgeräts 458 erfasst bzw. gescannt werden.

Wie schematische dargestellt ist, ist auf dem mobilen Nutzerendgerät 458 eine Druckanwendung 466 installiert, insbesondere in Form einer "App". Die dargestellte Druckanwendung 466 weist eine Mehrzahl von durch einen Prozessor des mobilen Nutzerendgeräts 458 ausführbare Softwaremodule 468, 470, 472 und 474 auf. Die Module 468, 470, 472 und 474 können zumindest teilweise mit Modulen 465, 462 und 464 des mobilen Nutzerendgeräts 458 interagieren.

Die Druckanwendung 466 umfasst mindestens ein Empfangsmodul 468, eingerichtet zum Erhalten des von der Computervorrichtung 402 bereitgestellten privaten Druckauftragsschlüssels eines Druckauftragsschlüsselpaares. Vorliegend kann das Empfangsmodul 468 den durch die Kamera 465 detektierten Druckauftragscode erhalten und beispielsweise den in diesem Code enthaltenen privaten Druckauftragsschlüssel extrahieren.

Ferner kann die Druckanwendung 466 mindestens ein Speichermodul 470 umfassen, eingerichtet zum Speichern des erhaltenen privaten Druckauftragsschlüssels in einem (sicheren) Datenspeicher 464 des mobilen Nutzerendgeräts 458.

Darüber hinaus ist das Empfangsmodul 468 insbesondere eingerichtet zum Erhalten eines öffentlichen Druckvorrichtungsschlüssels eines durch die Druckvorrichtung 408 an der Druckvorrichtung 408 bereitgestellten Druckvorrichtungsschlüsselpaares. Vorliegend kann das Empfangsmodul 468 den durch die Kamera 465 detektierten Druckvorrichtungscode erhalten und beispielsweise den in diesem Code enthaltenen privaten Druckvorrichtungsschlüssel extrahieren.

Die Druckanwendung 466 weist mindestens ein Verschlüsselungsmodul 472 auf, eingerichtet zum Verschlüsseln des gespeicherten privaten Druckauftragsschlüssels mit dem erhaltenen öffentlichen Druckvorrichtungsschlüssel. Insbesondere bei Erhalt des öffentlichen Druckvorrichtungsschlüssels kann der gespeicherte private Druckvorrichtungsschlüssel, insbesondere unmittelbar, verschlüsselt werden. Ferner umfasst die Druckanwendung 466 mindestens ein Sendemodul 474, eingerichtet zum Bewirken eines Aussendens des verschlüsselten privaten Druckauftragsschlüssels durch ein Kommunikationsmodul 462 des mobilen Nutzerendgeräts 458. Insbesondere kann das mobile Nutzerendgerät 458 über das Kommunikationsmodul 462 (z.B. enthaltend eine WLAN-Schnittstelle oder dergleichen) an das Kommunikationsnetz 422 anschließbar bzw. angeschlossen sein. Wie zu erkennen ist, kann ein drahtloser Kanal mit einer Kommunikationseinrichtung 476 (beispielsweise ein WLAN-Knoten, der mit dem drahtgebundenen Netzwerk gekoppelt ist) für die Kommunikation verwendet werden.

Das Sendemodul 474 ist ferner insbesondere eingerichtet zum Bewirken eines Aussendens einer Bestätigungsnachricht durch das Kommunikationsmodul 462 des mobilen Nutzerendgeräts 458, bei einem Erhalt des privaten Druckauftragsschlüssels. Beispielsweise kann bei einer Detektion eines erfolgreichen Speicherns des privaten Druckauftragsschlüssels die Aussendung unmittelbar bewirkt werden.

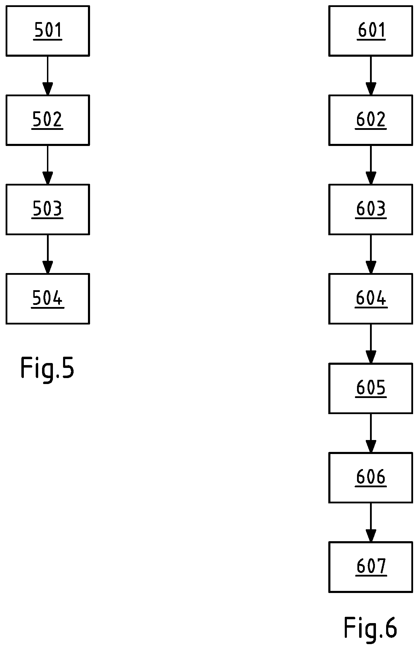

Der private Druckauftragsschlüssels des bereitgestellten Druckauftragsschlüsselpaares kann auf der Computervorrichtung 402 nach einem Erhalt durch das mobile Nutzerendgerät 458 gelöscht werden, also insbesondere unmittelbar nach Erhalt der Bestätigungsnachricht. Wie bereits beschrieben wurde, kann die optionale Löschung bei Varianten der Anmeldung auch zeitabhängig sein. Die Figur 5 zeigt ein Diagramm eines Ausführungsbeispiels eines Verfahrens gemäß der vorliegenden Erfindung zum Betreiben eines Drucksystems (vgl. z.B. Fig. 4), zumindest zum Betreiben eines Druckservers (vgl. z.B. Fig. 2, 4).

In einem ersten Schritt 501 erfolgt ein Erhalten, durch den Druckserver, zumindest eines mit einem öffentlichen Druckauftragsschlüssel eines

Druckauftragsschlüsselpaares verschlüsselten Druckauftrags von einer mit dem Kommunikationsnetz verbindbaren Computervorrichtung (wie zuvor beschrieben wurde).

In einem (zeitlich insbesondere nachgelagerten) Schritt 502 erfolgt ein Erhalten, durch den Druckserver, zumindest eines mit einem öffentlichen Druckvorrichtungsschlüssel eines Druckvorrichtungsschlüsselpaares verschlüsselten privaten Druckauftragsschlüssel des Druckauftragsschlüsselpaares von einem mobilen Nutzerendgerät (wie zuvor beschrieben wurde). Das Druckvorrichtungsschlüsselpaar ist der Druckvorrichtung (systemweit eindeutig) zugeordnet.

In Schritt 503 erfolgt ein Übertragen, durch den Druckserver, zumindest des erhaltenen verschlüsselten Druckauftrags an die Druckvorrichtung zum Ausdrucken des Druckauftrags durch die Druckvorrichtung (wie zuvor beschrieben wurde).

In Schritt 504 erfolgt ein Übertragen, durch den Druckserver, zumindest des erhaltenen verschlüsselten privaten Druckauftragsschlüssels an die Druckvorrichtung (wie zuvor beschrieben wurde).

Insbesondere die Schritte 503 und 504 können zumindest teilweise parallel durchgeführt werden und/oder die genannten Daten können in einem Datensatz (in einem oder mehreren Datenpaketen) übertragen werden. Wie beschrieben wurde, kann jedoch auch ein zeitlicher Versatz vorgesehen sein, insbesondere wenn der Druckauftrag erst bei Erhalt einer Anforderungsnachricht versendet wird.

Die Figur 6 zeigt ein Diagramm eines weiteren Ausführungsbeispiels zum Betreiben eines Drucksystems (vgl. z.B. Fig. 4), zumindest zum Betreiben einer Druckvorrichtung (vgl. z.B. Fig. 3, 4).

In einem ersten Schritt 601 erfolgt ein Bereitstellen, durch die Druckvorrichtung, eines Druckvorrichtungsschlüsselpaar, enthaltend einen privaten Druckvorrichtungsschlüssel und einen öffentlichen Druckvorrichtungsschlüssel (wie zuvor beschrieben wurde).

In Schritt 602 erfolgt ein Speichern, durch die Druckvorrichtung, des privaten Druckvorrichtungsschlüssels des bereitgestellten Druckvorrichtungsschlüsselpaares in einem Datenspeicher der Druckvorrichtung und insbesondere ein Bereitstellen des öffentlichen Druckvorrichtungsschlüssels des bereitgestellten Druckvorrichtungsschlüsselpaares an der Druckvorrichtung, derart, dass das mobile Nutzerendgerät den öffentlichen Druckvorrichtungsschlüssel (nur) an der Druckvorrichtung erhalten kann (wie zuvor beschrieben wurde).

Ferner erfolgt in Schritt 603 ein Erhalten, durch die Druckvorrichtung, eines mit dem bereitgestellten öffentlichen Druckvorrichtungsschlüssel verschlüsselten privaten Druckauftragsschlüssels eines Druckauftragsschlüsselpaares von einem mobilen Nutzerendgerät via dem Druckserver (wie bereits beschrieben wurde).

In dem nächsten Schritt 604 kann ein Erhalten, durch die Druckvorrichtung, eines mit einem öffentlichen Druckauftragsschlüssel eines Druckauftragsschlüsselpaares verschlüsselten Druckauftrags von einem Druckserver erfolgen (wie bereits beschrieben wurde).

Dann erfolgt in Schritt 605 ein Entschlüsseln, durch die Druckvorrichtung, des erhaltenen verschlüsselten privaten Druckauftragsschlüssel mit dem gespeicherten privaten Druckvorrichtungsschlüssel des Druckvorrichtungsschlüsselpaares (wie bereits beschrieben wurde). Anschließend erfolgt in Schritt 606 ein Entschlüsseln, durch die Druckvorrichtung, des erhaltenen verschlüsselten Druckauftrags mit dem entschlüsselten privaten Druckauftragsschlüssel (wie bereits beschrieben wurde).

Optional kann nach Schritt 605 zunächst eine Anforderungsnachricht gesendet werden. Als Antwort hierauf kann dann erst der Druckauftrag entsprechend Schritt 604 erhalten werden. Dann kann der Schritt 606 folgen.

In einem weiteren Schritt 607 kann ein Ausdrucken des entschlüsselten Druckauftrags bzw. der entsprechenden Druckdaten erfolgen (wie bereits beschrieben wurde).

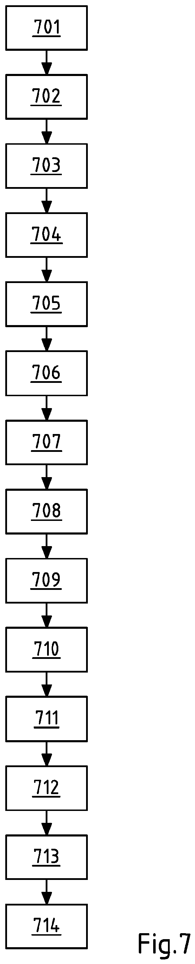

Vorzugsweise können die Verfahren nach Figur 5 und 6 miteinander kombiniert werden. Dies wird nachfolgend an einem besonders bevorzugten Ausführungsbeispiel mit Hilfe der Figur 7 beispielhaft erläutert. Die Figur 7 zeigt ein Diagramm eines weiteren Ausführungsbeispiels eines Verfahrens zum Betreiben eines Drucksystems (vgl. z.B. Fig. 4).

In einem ersten Schritt 701 kann ein Druckauftrag durch die Computervorrichtung 402, die von einem berechtigten Nutzer, der über ein mobiles Nutzerendgerät 458 verfügt, bedient wird, erstellt werden. Wird die Erstellung eines Druckauftrags detektiert (also insbesondere ein Druckwunsch aufgrund einer entsprechenden Nutzereingabe), kann in Schritt 702 ein (asynchrones) Druckauftragsschlüsselpaar für diesen Druckauftrag generiert werden, das nur für diesen Druckauftrag gültig ist.

In Schritt 703 kann dann dieser Druckauftrag mit dem öffentlichen Druckauftragsschlüssel des generierten Druckauftragsschlüsselpaar verschlüsselt werden. Insbesondere parallel hierzu kann der private Druckauftragsschlüssel in Schritt 704 in Form eines optischen Druckauftragscodes durch eine optische Anzeige 454 der Computervorrichtung 402 angezeigt werden.

In Schritt 705 kann ein Versenden des verschlüsselten Druckauftrags durch die Computervorrichtung erfolgen. Insbesondere kann ein Druckauftragsdatensatz versendet werden, enthaltend den verschlüsselten Druckauftrag, eine Druckkennung (beispielsweise gebildet durch Nutzerkennung und Zeitstempel z.B. der Druckauftragserstellung) und eine Druckvorrichtungskennung und/oder Druckvorrichtungsadresse von der Druckvorrichtung, die zum Drucken des Druckauftrags verwendet werden soll bzw. von dem Nutzer aus insbesondere einer Mehrzahl von verfügbaren Druckvorrichtungen ausgewählt wurde. Dieser Schritt umfasst insbesondere ein Erhalten des verschlüsselten Druckauftrags, vorzugsweise des beschriebenen Druckauftragsdatensatzes, durch den Druckserver 406.

In Schritt 706 (der zumindest teilweise parallel zu Schritt 705 ausgeführt werden kann) kann ein Erfassen des angezeigten Druckauftragscodes erfolgen. Der Druckauftragscode kann vorzugsweise den genannten privaten Druckauftragsschlüssel und insbesondere eine weitere Druckkennung (beispielsweise gebildet durch Nutzerkennung und Zeitstempel z.B. der Druckauftragserstellung) und vorzugsweise eine Druckvorrichtungskennung und/oder Druckvorrichtungsadresse enthalten, die zum Drucken des Druckauftrags verwendet werden soll bzw. von dem Nutzer aus insbesondere einer Mehrzahl von verfügbaren Druckvorrichtungen ausgewählt wurde. Vorzugsweise können die erste Druckkennung und die weitere Druckkennung identisch sein und insbesondere dem Druckauftrag eindeutig zugeordnet sein.

Die insbesondere aus dem Druckauftragscode extrahierten Daten (privater Druckauftragsschlüssel, Druckkennung und Druckvorrichtungskennung und/oder Druckvorrichtungsadresse) können in einem Datenspeicher des mobilen Nutzerendgeräts 458 gespeichert werden (Schritt 707).

Der genannte private Druckauftragsschlüssel kann nach Ablauf einer bestimmten Zeitdauer (z.B. nach 30 s nach Start des optischen Anzeigens des Druckauftragscodes) und/oder nach Erhalt einer (von dem mobilen Nutzerendgerät 458 gesendeten) Bestätigungsnachricht auf der Computervorrichtung 402 gelöscht werden.

Der Nutzer kann, zusammen mit seinem mobilen Nutzerendgerät 458, sich nach dem Einscannen des Druckauftragscodes von der Computervorrichtung 402 zu der (in der Regel) entfernt von der Computervorrichtung 402 angeordneten Druckvorrichtung 408 begeben. Beispielsweise kann die Druckvorrichtung 408 in einem anderen Raum als die Computervorrichtung 402 oder zumindest deutlich entfernt (größer als 5 m, insbesondere größer als 10 m) von der Computervorrichtung 402 befinden.

An der Druckvorrichtung 408 kann in Schritt 708 durch dieses mobile Nutzerendgerät 458 (insbesondere durch den berechtigten Nutzer) der Druckvorrichtungscode 448 erfasst werden, insbesondere mittels der Kamera eingescannt werden. Der Druckvorrichtungscode enthält zumindest den öffentlichen Druckvorrichtungsschlüssel eines (asynchronen) Druckvorrichtungsschlüsselpaares, das der Druckvorrichtung 408 eindeutig zugeordnet ist, und optional die Druckvorrichtungskennung und/oder die Druckvorrichtungsadresse der Druckvorrichtung 408.

Es sei angemerkt, dass das Druckvorrichtungsschlüsselpaar einer Druckvorrichtung 408 regelmäßig aktualisiert werden kann, also insbesondere ein neues Druckvorrichtungsschlüsselpaar generiert werden kann.

In Schritt 708 kann ein Verschlüsseln des gespeicherten privaten Druckauftragsschlüssels mit dem erhaltenen öffentlichen Druckvorrichtungsschlüssel erfolgen, durch die Druckanwendung 466 bzw. das mobile Nutzerendgeräts 458.

Vor diesem Schritt kann optional abgeglichen werden, ob die an der Druckvorrichtung erfasste Druckvorrichtungskennung und/oder Druckvorrichtungsadresse mit der Druckvorrichtungskennung und/oder die Druckvorrichtungsadresse übereinstimmt, die mit dem privaten Druckauftragsschlüssel gespeichert wurde. Ist dies nicht der Fall, kann ein entsprechender Hinweis über eine Schnittstelle des mobilen Endgeräts 458 an den Nutzer ausgegeben werden. Wenn bei dem optionalen Abgleich eine Übereinstimmung festgestellt wird, kann der gespeicherte private Druckauftragsschlüssel mit dem erhaltenen öffentlichen Druckvorrichtungsschlüssel in Schritt 708 verschlüsselt werden.

In Schritt 709 kann der verschlüsselte private Druckauftragsschlüssel übertragen werden. Vorzugsweise kann ein Schlüsseldatensatz übertragen werden, enthaltend den verschlüsselten Druckauftragsschlüssel, die weitere Druckkennung und insbesondere die Druckvorrichtungskennung und/oder die Druckvorrichtungsadresse. Der Schritt 709 umfasst insbesondere ein Erhalten, durch den Druckserver 406, des verschlüsselten privaten Druckauftragsschlüssels, insbesondere des genannten Schlüsseldatensatzes. Bei Varianten der Anmeldung kann Druckauftragsschlüssel und Druckkennung gemeinsam verschlüsselt sein, wie ausgeführt wurde.

Nach dem Erhalten der genannten Daten kann insbesondere unmittelbar danach in Schritt 710 bestimmt werden, ob ein zughöriger Druckauftrag in dem Datenspeicher 434 des Druckservers 406 gespeichert ist. Insbesondere kann die empfangene weitere Druckkennung mit sämtlichen gespeicherten ersten Druckkennungen der gespeicherten Druckaufträge verglichen werden. Wie beschrieben wurde, kann der Schlüsseldatensatz auch (unmittelbar) an die Druckvorrichtung 408 weitergeleitet werden und das Bestimmen erst bei Erhalt einer vorbeschriebenen Anforderungsnachricht erfolgen.

Wird eine Korrespondenz, im vorliegenden Ausführungsbeispiel eine Identität, zwischen der erhaltenen weiteren Druckkennung und einer gespeicherten ersten Druckkennung detektiert, kann der zu dieser ersten Druckkennung gespeicherte verschlüsselte Druckauftrag, vorzugsweise Druckauftragsdatensatz, und der erhaltene verschlüsselte private Druckauftragsschlüssel, insbesondere der entsprechenden Schlüsseldatensatz, (zusammen) übertragen werden (Schritt 711).

Insbesondere erfolgt in dem vorliegenden Beispiel ein Übertragen an die Druckvorrichtung 408, abhängig von der Druckvorrichtungskennung und/oder der Druckvorrichtungsadresse. Der Schritt 711 umfasst zumindest ein Erhalten, durch die Druckvorrichtung 408, des erhaltenen verschlüsselten Druckauftrags und des verschlüsselten privaten Druckauftragsschlüssel durch die Druckvorrichtung.

In Schritt 712 erfolgt ein Entschlüsseln, durch die Druckvorrichtung 408, des privaten Druckauftragsschlüssels unter Nutzung des privaten Druckvorrichtungsschlüssels der Druckvorrichtung 408.

Anschließend wird, in Schritt 713, dieser entschlüsselte private Druckauftragsschlüssel durch die Druckvorrichtung 408 verwendet, um den zugehörigen Druckauftrag zu entschlüsseln.

Dann kann in Schritt 714 der entschlüsselte Druckauftrag ausgedruckt werden. Der sich an der Druckvorrichtung befindende berechtigte Nutzer kann das ausgedruckte Dokument entgegennehmen. Ein sicheres Drucken kann gewährleistet werden.

Nachfolgend wird die Anmeldung nochmal in Kürze beschrieben: Wie bereits beschrieben wurde, kann in der heutigen Zeit von einer flächendeckenden Verfügbarkeit von Smartphones oder ähnlichen mobilen Nutzerendgeräten ausgegangen werden. Anmeldungsgemäß ist erkannt worden, dass es sich daher anbietet, die für einen "Signaturkarten-Ansatz" benötigte Infrastruktur durch den Einsatz von mobilen Nutzerendgeräten überflüssig zu machen.

Das Ziel der Anmeldung ist es ferner, eine benutzerbezogene Verschlüsselung von Druckausgaben zu erreichen. Anstatt aber einen tatsächlich persönlichen Schlüssel zu verwenden, basiert der anmeldungsgemäße Ansatz insbesondere auf einem sogenannten Session-Schlüsselpaar, d.h. es handelt sich um ein (asynchrones) Schlüsselpaar, das vorzugsweise ausschließlich für diesen einen Druckvorgang Verwendung finden kann. Damit ist das Schlüsselpaar (inhärent) personenbezogen (er wird ja in dem Augenblick nur von der druckenden und berechtigten Person verwendet, ist dieser Person also eindeutig zugeordnet), und darüber hinaus auch gerätebezogen (weil er nur für den Vorgang für das zum Druckeinsatz kommende Gerät (also die ausgewählte Druckvorrichtung) gilt) und auch druckauftragsbezogen, weil für jeden Druckauftrag ein neuer Schlüssel generiert werden kann. Hierdurch kann die Sicherheit im Vergleich zum Stand der Technik damit signifikant erhöht werden.

Der anmeldungsgemäße bevorzugte Druckablauf bzw. das bevorzugte Verfahren kann in vier Phasen aufgeteilt werden, wobei die einzelnen Phasen eigenständig erfinderisch sind:
1. Job-Session-Schlüsselpaar-Generierung (bzw. Druckauftragsschlüsselpaar-Generierung, insbesondere durch die Computervorrichtung) und Übertragung des Job-Session-Private-Key (bzw. privaten Druckauftragsschlüssel) auf ein mobiles Nutzerendgerät von dem Nutzer, der den Druckauftrag erstellt hat bzw. hierfür berechtigt ist.
2. Verschlüsselung des Jobs (bzw. Druckauftrags) mit dem Job-Session-Public-Key und Übertragung des verschlüsselten Druckauftrags an den Druckserver
3. Übertragung des Job-Session-Private-Key von dem mobilen Nutzerendgerät auf den Drucker unter Zuhilfenahme eines Printer-Session-Paares (Druckvorrichtungsschlüsselpaars), bestehend aus Printer-Session-Private-Key und Printer-Session-Public-Key.
4. Übertragung des mit dem Job-Session-Public-Key verschlüsselten Druckjobs von dem Druckserver zum Endgerät bzw. zur Druckvorrichtung und Entschlüsselung des verschlüsselten Druckauftrags mit dem Job-Session-Private-Key auf der Druckvorrichtung.

### Phase1: Schlüsselübertragung

Sobald ein Dokument gedruckt werden soll, kann der Arbeitsplatz bzw. die Computervorrichtung für den Druckvorgang bzw. -auftrag ein neues Schlüsselpaar generieren, insbesondere bestehend aus Job-Session-Private-Key und Job-Session-Public-Key (wie beschrieben wurde).

Der Job-Session-Private-Key kann als 2D Barcode kodiert und als Bild auf dem Bildschirm der Computervorrichtung angezeigt werden. Eine Druckanwendung auf dem mobilen Nutzerendgerät kann die Schlüsseldaten unter Zuhilfenahme der Kamera in einen sicheren Speicher auf dem Nutzerendgerät kopieren.

### Phase 2: Verschlüsselung des Druckjobs und Übertragung zum Server

Sobald der Schlüssel kopiert ist (es kann eine vorbeschriebene Bestätigung beispielsweise durch den Nutzer erfolgen), kann der Druckauftrag mit dem Job-Session-Public-Key verschlüsselt und zum Druckserver übertragen werden. Dort kann er so wie er ist, d.h. verschlüsselt mit dem Job-Session-Public-Key, abgespeichert werden.

### Phase 3: Übertragen des Job-Session-Private-Key

Der Nutzer bewegt sich von der Computervorrichtung zu dem Drucker und kann mit der Druckanwendung den Geräte-Session-Public-Key fotografieren. Mit diesem Schlüssel kann nun der Job-Session-Private-Key verschlüsselt und über den Druckserver bis zu dem Drucker geschickt werden. Dort kann er mit Hilfe des Geräte-Session-Private-Key wieder entschlüsselt werden, so dass er nun für Entschlüsselungen von Druckaufträgen bereitsteht.

### Phase 4: Senden des Jobs und Entschlüsselung

Nun, da sich der private Schlüssel für die Entschlüsselung des Jobs auf dem Drucker befindet, kann der Druckauftrag zum Gerät und dort mit genau diesem Schlüssel wieder entschlüsselt werden. Insbesondere kann hierfür eine vorbeschriebene Anforderungsnachricht und eine entsprechende Antwort gesendet werden.

## Patentansprüche

1. Verfahren zum Betreiben eines Drucksystems (400) mit mindestens einem Druckserver (206, 406) und mindestens einer mit dem Druckserver (206, 406) kommunikativ verbindbaren Druckvorrichtung (308, 408), umfassend:
- Erhalten, durch den Druckserver (206, 406), eines mit einem öffentlichen Druckauftragsschlüssel eines Druckauftragsschlüsselpaares verschlüsselten Druckauftrags von einer mit dem Druckserver (206, 406) kommunikativ verbindbaren Computervorrichtung (402),
- Erhalten, durch den Druckserver (206, 406), eines mit einem öffentlichen Druckvorrichtungsschlüssel eines Druckvorrichtungsschlüsselpaares verschlüsselten privaten Druckauftragsschlüssels des Druckauftragsschlüsselpaares von einem mobilen Nutzerendgerät (458),
- wobei das Druckvorrichtungsschlüsselpaar der Druckvorrichtung (308, 408) zugeordnet ist,
- Übertragen, durch den Druckserver (206, 406), des erhaltenen verschlüsselten privaten Druckauftragsschlüssels an die Druckvorrichtung (308, 408), und
- Übertragen, durch den Druckserver (206, 406), des erhaltenen verschlüsselten Druckauftrags an die Druckvorrichtung (308, 408) zum Ausdrucken des Druckauftrags durch die Druckvorrichtung (308, 408).

2. Verfahren nach Anspruch 1, **dadurch gekennzeichnet, dass**
- der private Druckvorrichtungsschlüssel des Druckvorrichtungsschlüsselpaares in einem Datenspeicher (342, 442) der Druckvorrichtung (308, 408) gespeichert ist, wobei das Verfahren ferner umfasst:
- Entschlüsseln, durch die Druckvorrichtung (308, 408), des erhaltenen verschlüsselten privaten Druckauftragsschlüssels mit dem gespeicherten privaten Druckvorrichtungsschlüssel des Druckvorrichtungsschlüsselpaares, und
- Entschlüsseln, durch die Druckvorrichtung (308, 408), des erhaltenen verschlüsselten Druckauftrags mit dem entschlüsselten privaten Druckauftragsschlüssel.

3. Verfahren nach Anspruch 2, **dadurch gekennzeichnet, dass** das Verfahren umfasst:
- Bereitstellen, durch die Computervorrichtung (402), des Druckauftragsschlüsselpaares, insbesondere bei einer Erstellung des Druckauftrags,
- Verschlüsseln des Druckauftrags mit dem öffentlichen Druckauftragsschlüssel des bereitgestellten Druckauftragsschlüsselpaares,
- Bewirken, durch die Computervorrichtung (402), eines Übertragens des verschlüsselten Druckauftrags an den Druckserver (206, 406), und
- Bereitstellen, durch die Computervorrichtung (402), des privaten Druckauftragsschlüssels des bereitgestellten Druckauftragsschlüsselpaares derart, dass das mobile Nutzerendgerät (458) den privaten Druckauftragsschlüssel an der Computervorrichtung (402) erhalten kann.

4. Verfahren nach Anspruch 3, **dadurch gekennzeichnet, dass**
- das Bereitstellen, durch die Computervorrichtung (402), des privaten Druckauftragsschlüssels des bereitgestellten Druckauftragsschlüsselpaares ein Anzeigen eines optischen Druckauftragscodes durch eine optische Anzeige (454) der Computervorrichtung (402) umfasst,
- wobei der optische Druckauftragscode den privaten Druckauftragsschlüssel enthält.

5. Verfahren nach Anspruch 4, **dadurch gekennzeichnet, dass**
- der private Druckauftragsschlüssel des bereitgestellten Druckauftragsschlüsselpaares auf der Computervorrichtung (402) nach einem Erhalt durch das mobile Nutzerendgerät (458) gelöscht wird.

6. Verfahren nach einem der vorherigen Ansprüche 3 bis 5, **dadurch gekennzeichnet, dass**
- das Bereitstellen des Druckauftragsschlüsselpaares ein Generieren eines neuen Druckauftragsschlüsselpaares für jeden erstellten Druckauftrag umfasst.

7. Verfahren nach einem der vorherigen Ansprüche, **dadurch gekennzeichnet, dass** das Verfahren umfasst:
- Bereitstellen, durch die Druckvorrichtung (308, 408), des öffentlichen Druckvorrichtungsschlüssels eines bereitgestellten Druckvorrichtungsschlüsselpaares, derart, dass das mobile Nutzerendgerät (458) den öffentlichen Druckvorrichtungsschlüssels an der Druckvorrichtung (308, 408) erhalten kann, und
- Speichern des privaten Druckvorrichtungsschlüssels des bereitgestellten Druckvorrichtungsschlüsselpaares in einem Datenspeicher (342, 442) der Druckvorrichtung (308, 408).

8. Verfahren nach Anspruch 7, **dadurch gekennzeichnet, dass**
- das Bereitstellen, durch die Druckvorrichtung (308, 408), des öffentlichen Druckvorrichtungsschlüssels des bereitgestellten Druckvorrichtungsschlüsselpaares ein Anzeigen eines optischen Druckvorrichtungscodes umfasst,
- wobei der optische Druckvorrichtungscode den öffentlichen Druckvorrichtungsschlüssel enthält.

9. Verfahren nach einem der vorherigen Ansprüche, **dadurch gekennzeichnet, dass**
- das Erhalten, durch den Druckserver (206, 406), des verschlüsselten Druckauftrags ein Erhalten einer ersten Druckkennung umfasst, und
- Erhalten, durch den Druckserver (206, 406), einer weiteren Druckkennung,
- wobei zumindest das Übertragen des erhaltenen verschlüsselten Druckauftrags an die Druckvorrichtung (308, 408) auf der ersten Druckkennung und der weiteren Druckkennung basiert.

10. Verfahren nach Anspruch 9, **dadurch gekennzeichnet, dass** das Verfahren umfasst:
- Speichern, durch den Druckserver (206, 406), des erhaltenen verschlüsselten Druckauftrags zusammen mit der erhaltenen ersten Druckkennung in einem Datenspeicher (234, 434) des Druckservers (206, 406).

11. Verfahren nach Anspruch 10, **dadurch gekennzeichnet, dass** das Verfahren umfasst:
- Vergleichen, einer erhaltenen weiteren Druckkennung mit der mindestens einen gespeicherten ersten Druckkennung, und
- Übertragen, wenn in dem Vergleichsschritt eine Korrespondenz zwischen der erhaltenen weiteren Druckkennung und einer gespeicherten ersten Druckkennung bestimmt wird, zumindest des gespeicherten verschlüsselten Druckauftrags mit der zu der erhaltenen weiteren Druckkennung korrespondierenden ersten Druckkennung an die Druckvorrichtung (308, 408).

12. Druckserver (206, 406) für ein Drucksystem (400), umfassend:
- mindestens ein Empfangsmodul (230), eingerichtet zum Erhalten eines mit einem öffentlichen Druckauftragsschlüssel eines Druckauftragsschlüsselpaares verschlüsselten Druckauftrags von einer Computervorrichtung (402),
- wobei das Empfangsmodul (230) eingerichtet ist zum Erhalten eines mit einem öffentlichen Druckvorrichtungsschlüssel eines Druckvorrichtungsschlüsselpaares verschlüsselten privaten Druckauftragsschlüssels des Druckauftragsschlüsselpaares von einem mobilen Nutzerendgerät (458),
- wobei das Druckvorrichtungsschlüsselpaar einer Druckvorrichtung (308, 408) zugeordnet ist,
- mindestens ein Sendemodul (232, 432) eingerichtet zum Übertragen des erhaltenen verschlüsselten privaten Druckauftragsschlüssel an die Druckvorrichtung (308, 408), und
- wobei das Sendemodul (232, 432) eingerichtet ist zum Übertragen des erhaltenen verschlüsselten Druckauftrags an die Druckvorrichtung (308, 408) zum Ausdrucken des Druckauftrags durch die Druckvorrichtung (308, 408).

13. Drucksystem (400), umfassend:
- mindestens einen Druckserver (206, 406) nach Anspruch 12, und
- mindestens eine mit dem Druckserver (206, 406) kommunikativ verbindbare Druckvorrichtung (308, 408).

## Claims

1. Method of operating a printing system (400) comprising at least one printing server (206, 406) and at least one printing device (308, 408) communicatively connectable to the printing server (206, 406), comprising:
- obtaining, by the printing server (206, 406), a print job encrypted with a public print job key of a print job key pair from a computer device (402) communicatively connectable to the printing server (206, 406),
- receiving, by the printing server (206, 406), a private print job key of the print job key pair encrypted with a public printing device key of a printing device key pair from a mobile user terminal (458),
- wherein the printing device key pair is associated with the printing device (308, 408),
- transmitting, by the printing server (206, 406), the received encrypted private print job key to the printing device (308, 408), and
- transmitting, by the printing server (206, 406), the received encrypted print job to the printing device (308, 408) for printing of the print job by the printing device (308, 408).

2. Method according to claim 1, **characterized in that**
- the private printing device key of the printing device key pair is stored in a data memory (342, 442) of the printing device (308, 408), the method further comprising:
- decrypting, by the printing device (308, 408), the obtained encrypted private print job key with the stored private printing device key of the printing device key pair, and
- decrypting, by the printing device (308, 408), the received encrypted print job with the decrypted private print job key.

3. Method according to claim 2, **characterized in that** the method comprises:
- providing, by the computer device (402), the print job key pair, in particular upon a creation of the print job,
- encrypting the print job with the public print job key of the provided print job key pair,
- transmitting, by the computer device (402), the encrypted print job to the printing server (206, 406), and
- providing, by the computer device (402), the private print job key of the provided print job key pair such that the mobile user terminal (458) can obtain the private print job key at the computer device (402).

4. Method according to claim 3, **characterized in that**
- providing, by the computer device (402), the private print job key of the provided print job key pair comprises displaying an optical print job code by an optical display (454) of the computer device (402),
- wherein the optical print job code contains the private print job key.

5. Method according to claim 4, **characterized in that**
- the private print job key of the provided print job key pair on the computer device (402) is deleted after a receipt by the mobile user terminal (458).

6. Method according to any one of the preceding claims 3 to 5, **characterized in that**
- the providing the print job key pair comprises generating a new print job key pair for each created print job.

7. Method according to any one of the preceding claims, **characterized in that** the method comprises:
- providing, by the printing device (308, 408), the public printing device key of a provided printing device key pair such that the mobile user terminal (458) can obtain the public printing device key at the printing device (308, 408), and
- storing the private printing device key of the provided printing device key pair in a data memory (342, 442) of the printing device (308, 408).

8. Method according to claim 7, **characterized in that**
- the providing, by the printing device (308, 408), of the public printing device key of the provided printing device key pair comprises displaying an optical printing device code,
- wherein the optical printing device code contains the public printing device key.

9. Method according to any one of the preceding claims, **characterized in that**
- the obtaining, by the printing server (206, 406), of the encrypted print job comprises obtaining a first print identifier, and
- obtaining, by the printing server (206, 406), a further print identifier,
- wherein at least the transmitting of the received encrypted print job to the printing device (308, 408) is based on the first print identifier and the further print identifier.

10. Method according to claim 9, **characterized in that** the method comprises:
- storing, by the printing server (206, 406), the received encrypted print job together with the received first print identifier in a data memory (234, 434) of the printing server (206, 406).

11. Method according to claim 10, **characterized in that** the method comprises:
- comparing a received further print identifier with the at least one stored first print identifier, and
- transmitting, when a correspondence between the received further print identifier and a stored first print identifier is determined in the comparing step, at least the stored encrypted print job with the first print identifier corresponding to the received further print identifier to the printing device (308, 408).

12. Printing server (206, 406) for a printing system (400), comprising:
- at least one receiving module (230) configured to receive a print job encrypted with a public print job key of a print job key pair from a computer device (402),
- wherein the receiving module (230) is configured to obtain a private print job key of the print job key pair encrypted with a public printing device key of a printing device key pair from a mobile user terminal (458),
- wherein the printing device key pair is associated with a printing device (308, 408),
- at least one transmitting module (232, 432) configured to transmit the received encrypted private print job key to the printing device (308, 408), and
- wherein the transmitting module (232, 432) is configured to transmit the received encrypted print job to the printing device (308, 408) for printing of the print job by the printing device (308, 408).

13. Printing system (400), comprising:
- at least one printing server (206, 406) according to claim 12, and
- at least one printing device (308, 408) communicatively connectable to the printing server (206, 406).

## Revendications

1. Procédé d'exploitation d'un système d'impression (400) avec au moins un serveur d'impression (206, 406) et au moins un dispositif d'impression (308, 408) reliable communicativement au serveur d'impression (206, 406), comprenant:
- obtenir, par le serveur d'impression (206, 406), un ordre d'impression chiffré avec une clé d'ordre d'impression publique d'une paire de clés d'ordre d'impression, à partir d'un dispositif informatique (402) reliable communicativement au serveur d'impression (206, 406),
- obtenir, par le serveur d'impression (206, 406), d'une clé d'ordre d'impression privée de la paire de clés d'ordre d'impression, chiffrée avec une clé de dispositif d'impression publique d'une paire de clés de dispositif d'impression, à partir d'un terminal utilisateur mobile (458),
- où la paire de clés de dispositif d'impression est associée au dispositif d'impression (308, 408),
- transmettre, par le serveur d'impression (206, 406), la clé d'ordre d'impression privée chiffrée obtenue au dispositif d'impression (308, 408), et
- transmettre, par le serveur d'impression (206, 406), l'ordre d'impression chiffrée obtenu au dispositif d'impression (308, 408) pour imprimer l'ordre d'impression par le dispositif d'impression (308, 408).

2. Procédé selon la revendication 1, **caractérisé en ce que**
- la clé privée de dispositif d'impression de la paire de clés de dispositif d'impression est stockée dans une mémoire de données (342, 442) du dispositif d'impression (308, 408), où le procédé comprend en outre:
- déchiffrer, par le dispositif d'impression (308, 408), la clé d'ordre d'impression privée chiffrée obtenue avec la clé de dispositif d'impression privée stockée de la paire de clés de dispositif d'impression, et
- déchiffrer, par le dispositif d'impression (308, 408), l'ordre d'impression chiffrée obtenu avec la clé d'ordre d'impression privée déchiffrée.

3. Procédé selon la revendication 2, **caractérisé en ce que** le procédé comprend:
- fournir, par le dispositif informatique (402), de la paire de clés d'ordre d'impression, en particulier lors d'une création de l'ordre d'impression,
- chiffrer l'ordre d'impression avec la clé publique d'ordre d'impression de la paire de clés d'ordre d'impression fournie,
- effectuer, par le dispositif informatique (402), une transmission de l'ordre d'impression chiffrée au serveur d'impression (206, 406), et
- fournir, par le dispositif informatique (402), la clé privée d'ordre d'impression de la paire de clés d'ordre d'impression fournie, de telle sorte que le terminal utilisateur mobile (458) peut obtenir la clé privée d'ordre d'impression au niveau du dispositif informatique (402).

4. Procédé selon la revendication 3, **caractérisé en ce que**
- fournir, par le dispositif informatique (402), la clé privée d'ordre d'impression de la paire de clés d'ordre d'impression fournie comprend une affichage d'un code optique d'ordre d'impression par un affichage optique (454) du dispositif informatique (402),
- où le code optique d'ordre d'impression contient la clé privée d'ordre d'impression.

5. Procédé selon la revendication 4, **caractérisé en ce que**
- la clé privée d'ordre d'impression de la paire de clés d'ordre d'impression fournie est effacée sur le dispositif informatique (402) après avoir été reçue par le terminal utilisateur mobile (458).

6. Procédé selon l'une des revendications 3 à 5 précédentes, **caractérisé en ce que**
- fournir la paire de clés d'ordre d'impression comprend une génération d'une nouvelle paire de clés d'ordre d'impression pour chaque ordre d'impression créée.

7. Procédé selon l'une des revendications précédentes, **caractérisé en ce que** le procédé comprend:
- fournir, par le dispositif d'impression (308, 408), de la clé publique d'impression d'une paire de clés d'impression fournie, de manière à ce que le terminal utilisateur mobile (458) peut obtenir la clé publique d'impression au niveau du dispositif d'impression (308, 408), et
- stocker la clé privée de dispositif d'impression de la paire de clés de dispositif d'impression fournie dans une mémoire de données (342, 442) du dispositif d'impression (308, 408).

8. Procédé selon la revendication 7, **caractérisé en ce que**
- fournir, par le dispositif d'impression (308, 408), de la clé de dispositif d'impression publique de la paire de clés de dispositif d'impression fournie comprend un affichage d'un code de dispositif d'impression optique,
- où le code de dispositif d'impression optique contient la clé de dispositif d'impression publique.

9. Procédé selon l'une des revendications précédentes, **caractérisé en ce que**
- obtenir, par le serveur d'impression (206, 406), l'ordre d'impression chiffré comprend une obtention d'un premier identifiant d'impression, et
- obtenir, par le serveur d'impression (206, 406), d'un autre identifiant d'impression,
- où au moins la transmission de l'ordre d'impression chiffrée obtenu au dispositif d'impression (308, 408) est basée sur le premier identifiant d'impression et l'autre identifiant d'impression.

10. Procédé selon la revendication 9, **caractérisé en ce que** le procédé comprend:
- stocker, par le serveur d'impression (206, 406), de l'ordre d'impression chiffrée obtenu avec un premier identifiant d'impression obtenu, dans une mémoire de données (234, 434) du serveur d'impression (206, 406).

11. Procédé selon la revendication 10, **caractérisé en ce que** le procédé comprend:
- comparer un autre identifiant d'impression obtenu avec le au moins un premier identifiant d'impression stocké, et
- transmettre, si une correspondance entre l'autre identifiant d'impression obtenu et un premier identifiant d'impression mémorisé est déterminée dans l'étape de comparaison, au moins l'ordre d'impression chiffré stocké avec le premier identifiant d'impression correspondant à l'autre identifiant d'impression obtenu au dispositif d'impression (308, 408).

12. Serveur d'impression (206, 406) pour un système d'impression (400), comprenant:
- au moins un module de réception (230), configuré pour recevoir d'un dispositif informatique (402) un ordre d'impression chiffré avec une clé publique d'ordre d'impression d'une paire de clés d'ordre d'impression,
- où le module de réception (230) est configuré pour recevoir d'un terminal utilisateur mobile (458) une clé d'ordre d'impression privée de la paire de clés d'ordre d'impression chiffrée avec une clé de dispositif d'impression publique d'une paire de clés de dispositif d'impression,
- où la paire de clés de dispositif d'impression est associée à un dispositif d'impression (308, 408),
- au moins un module de transmission (232, 432) configuré pour transmettre la clé d'ordre d'impression privée chiffrée obtenue au dispositif d'impression (308, 408), et
- où le module de transmission (232, 432) est configuré pour transmettre l'ordre d'impression chiffré reçu au dispositif d'impression (308, 408) pour impression de l'ordre d'impression par le dispositif d'impression (308, 408).

13. Système d'impression (400) comprenant:
- au moins un serveur d'impression (206, 406) selon la revendication 12, et
- au moins un dispositif d'impression (308, 408) reliable communicativement au serveur d'impression (206, 406).
